# EUROPÄISCHE PATENTSCHRIFT

(11) **EP 1 714 507 B1**
(45) Veröffentlichungstag und Bekanntmachung des Hinweises auf die Patenterteilung: **04.05.2016**
(21) Anmeldenummer: 05701580.2
(22) Anmeldetag: 21.01.2005
(51) Int. Cl.: H04W 76/00, H04W 88/06, H04L 12/54, H04W 4/10, H04W 76/02

(54) **VERFAHREN ZUM WECHSEL ZWISCHEN EINER PAKETORIENTIERTEN PTT-SITZNG UND EINER LEITUNGSORIENTIERTEN TELEFONVERBINDUNG ZWISCHEN MINDESTENS ZWEI FUNKKOMMUNIKATIONSENDGERÄTEN**
METHOD FOR SWITCHING BETWEEN A PACKET-ORIENTED PTT SESSION AND A LINE-ORIENTED TELEPHONE CONNECTION AMONG AT LEAST TWO RADIO COMMUNICATION TERMINALS
PROCEDE DE COMMUTATION ENTRE UNE SESSION EN ALTERNAT (PTT) ORIENTEE PAQUETS ET UNE CONNEXION TELEPHONIQUE ORIENTEE LIGNE ENTRE AU MOINS DEUX TERMINAUX DE COMMUNICATION RADIO

(30) Priorität: 13.02.2004 DE 102004007216
(43) Veröffentlichungstag der Anmeldung: 25.10.2006
(73) Patentinhaber: Siemens Aktiengesellschaft, 80333 München (DE)
(72) Erfinder: SCHWAGMANN, Norbert, 38102 Braunschweig (DE); KAUTZ, Olaf, 10179 Berlin (DE); LAUMEN, Josef, 81541 München (DE)
(86) Internationale Anmeldenummer: PCT/EP2005/050257
(87) Internationale Veröffentlichungsnummer: WO 2005/079088

(56) Entgegenhaltungen:
- "Terrestrial Trunked Radio (TETRA); Voice plus Data (V+D); Part 2: Air Interface (AI); ETSI TS 100 392-2" ETSI STANDARDS, EUROPEAN TELECOMMUNICATIONS STANDARDS INSTITUTE, SOPHIA-ANTIPO, FR, Bd. TETRA-3, Nr. V241, Oktober 2003 (2003-10), Seiten 642-643, XP002327397 ISSN: 0000-0001
- "OMA-AD PoC-V1 0-20040204-D Push to talk over Cellular (PoC) - Architecture. Draft Version 1.0" ANNOUNCEMENT OPEN MOBILE ALLIANCE, Nr. version 10, 4. Februar 2004 (2004-02-04), Seite complete, XP002327398
- 3GPP GROUP SERVICES AND SYSTEM ASPECTS: "TR 23.979 V1.1.0:3GPP enablers for OMA PoC Services" 3GPP TR 23.979 V1.1.0, August 2004 (2004-08), Seite complete, XP002321832
- "OMA-AD PoC-V1 0-20040719-D Push to talk over Cellular (PoC) - Architecture. Draft Version 1.0" ANNOUNCEMENT OPEN MOBILE ALLIANCE, Nr. version 10, 19. Juli 2004 (2004-07-19), Seite complete, XP002311851

## Beschreibung

Verfahren zum Wechsel zwischen einer paketorientierten PTT-Sitzung und einer leitungsorientierten Telefonverbindung zwischen mindestens zwei Funkkommunikationsgeräten, zugehöriges Funkkommunikationsgerät, Netzwerkkomponente sowie Funkkommunikationssystem

Damit sich zum Beispiel zwei Teilnehmer in einem Funkkommunikationssystem miteinander über ihre Funkkommunikationsgeräte unterhalten oder sonstige Nutzdaten austauschen können, wird üblicherweise eine sogenannte leitungsorientierte ("Circuit Switched") Telefonverbindung zwischen diesen beiden Funkkommunikationsgeräten über deren Luftschnittstellen hinweg zum Funknetzwerk aufgebaut. Diese leitungsorientierte Telefonverbindung ermöglicht den Nutzern der beiden Funkkommunikationsgeräte im sogenannten Voll-Duplex-Verfahren ("Full Duplex"), d.h. in Hin- und Rückübertragungsrichtung, gleichzeitig zu sprechen und zu hören, d.h. zeitgleich zu kommunizieren. Die jeweilig aufgebaute leitungsorientierte Telefonverbindung zwischen den beteiligten Funkkommunikationsgeräten wird dabei auch dann aufrechterhalten, wenn keiner der Benutzer der beteiligten Funkkommunikationsgeräte spricht oder allgemein betrachtet Nutzdaten sendet. Die Telefonverbindung zwischen den beiden Funkkommunikationsgeräten bleibt also so lange ständig aufgebaut, bis eines der Funkkommunikationsgeräte den Abbau der Telefonverbindung aktiv einleitet.

Demgegenüber ist in der Praxis für manche Kommunikationssituationen ein sogenannter "Push-to-Talk (PTT)"-Service von Vorteil. An einem solchen PTT-Service sind mehrere Funkkommunikationsgeräte beteiligt, so dass durch sie eine spezifische PTT-Gruppe gebildet ist. Dabei ist jeweils nur einem von mehreren beteiligten Funkkommunikationsgeräten zur selben Zeit eine Sendeberechtigung zum Senden bzw. Übermitteln von Nutzdaten, insbesondere Sprachnachrichten, an die übrigen, am PTT-Service beteiligten Funkkommunikationsgeräte zugeordnet. Die Zuteilung der Sendeberechtigung bekommt dabei der Nutzer eines Funkkommunikationsgeräts beispielsweise dadurch, dass er diese aktiv durch Drücken einer speziellen PTT-Taste an seinem Funkkommunikationsgerät von seinem netzwerkseitig zuständigen PTT-Server anfordert. Drückt dieser Nutzer die PTT-Taste an seinem Funkkommunikationsgerät als Erster gegenüber den anderen, am PTT-Service beteiligten Nutzern, so wird ihm die Sende- bzw. Übermittlungsberechtigung zum Senden einer Sprachnachricht oder sonstiger Nutzdaten an die anderen beteiligten Funkkommunikationsgeräte seitens des PTT-Servers vorrangig eingeräumt. Solange er die PTT-Taste gedrückt hält, ist nur ihm vom PTT-Server die Sendeberechtigung zugeteilt, während die Übermittlungsmöglichkeit für die Nutzer der übrigen beteiligten Funkkommunikationsgeräte gesperrt ist. Die Sprach- bzw. Nutzdaten werden dabei schon während des Sprechens des Versenders von dessen Funkkommunikationsgerät an die empfangenden Funkkommunikationsgeräte der PTT-Gruppe nahezu in Echtzeit insbesondere über den zuständigen PTT- Server im Funknetzwerk verteilt (Streaming). Insbesondere kann dabei vom PTT-Server eine maximale Berechtigungszeitdauer vorgegeben werden, innerhalb der nur für den momentan berechtigten Versender eine Übermittlung ermöglicht ist. Während der Übermittlung von Sprach- oder sonstigen Nutzdaten des jeweilig sendeberechtigten Funkkommunikationsgeräts können die anderen beteiligten Funkkommunikationsgeräte derselben PTT-Gruppe die übermittelten Sprach- oder Nutznachrichten des sendeberechtigten Funkkommunikationsgeräts lediglich empfangen und selbst nicht über den PTT-Server hinweg eigene Sprachnachrichten übermitteln bzw. zustellen. Erst wenn der Nutzer mit der momentanen Sendeberechtigung die PTT-Taste an seinem Funkkommunikationsgerät loslässt bzw. freigibt, gibt er seine exklusive Sendeberechtigung auf. Diese wird dann durch den PTT-Server vorzugsweise an dasjenige Funkkommunikationsgerät neu vergeben, dessen Nutzer als Nächster die PTT-Taste an seinem Funkkommunikationsgerät gedrückt hat. Mit anderen Worten ausgedrückt heißt das, dass bei der Übermittlung einer Sprachnachricht durch das jeweilig sendeberechtigte Funkkommunikationsgerät die übrigen, am PTT-Service beteiligten Funkkommunikationsgeräte diese Sprachnachricht nur abhören und den Benutzer dieses sendenden Funkkommunikationsgeräts nicht unterbrechen können.

Auf diese Weise ermöglicht der PTT-Service, dass lediglich ein einzelnes Funkkommunikationsgerät aus der Gruppe von am jeweiligen PTT-Dienst beteiligten Funkkommunikationsgeräten eine Sprachnachricht oder sonstige Nutzdaten an diese gleichzeitig nach dem sogenannten Halb-Duplex("Half Duplex")-Verfahren absetzen bzw. versenden kann, ohne dass er dabei von letzteren unterbrochen werden kann. Vorzugsweise kann der jeweilig sendeberechtigte Nutzer eines bestimmten PTT-Services bzw. -Dienstes insbesondere nach Drücken einer spezielle PTT-Taste an seinem Funkkommunikationsgerät einem oder mehreren empfangenden Funkkommunikationsgeräten als Mitglieder dieses PTT-Services eine Sprach- oder Nutznachricht gleichzeitig sowie nahezu in Echtzeit übermitteln. Die Bediener der ein oder mehreren empfangenden, am PTT-Service beteiligten Funkkommunikationsgeräte haben anschließend nach Loslassen der PTT-Taste am aktuell sendeberechtigten Funkkommunikationsgerät die Möglichkeit, in entsprechender Weise eine Antwort zu übermitteln. Dazu wird wiederum nur jeweils einem der antwortbereiten Funkkommunikationsgeräte vom jeweilig zuständigen PTT-Server eine Sendeberechtigung zugeteilt, während alle übrigen beteiligten Funkkommunikationsgeräte der PTT-Gruppe lediglich diese Antwortnachricht empfangen können und während deren Übertragung zum Antwortsenden gesperrt sind. Jedem Funkkommunikationsgerät, das derselben PTT-Gruppe angehört und eine Sprachnachricht oder Nutzdaten absetzen will, wird auf Anforderung an den netzwerkseitig zuständigen PTT-Server in entsprechender Weise von diesem eine Sendeberechtigung zugeteilt, während der die übrigen beteiligten Funkkommunikationsgeräte der PTT-Gruppe lediglich empfangsberechtigt sind. Zweckmäßig kann es insbesondere sein, dass der Nutzer des jeweiligen, empfangenden Funkkommunikationsgeräts der PTT-Gruppe schon während der Berechtigungszeitdauer des jeweilig sendeberechtigten Funkkommunikationsgeräts an den PTT-Server Sprachnachrichten oder Nutzdaten abschicken kann, der PTT-Server allerdings deren Weitervermittlung noch blockiert und eine Zwischenspeicherung vornimmt. Erst nach Beendigung der Übertragung oder Ablauf der maximal zugelassenen Berechtigungszeitdauer des momentan sendeberechtigten Funkkommunikationsgeräts wird die Vergabe der Sendeberechtigung durch den zuständigen PTT-Server so gesteuert, dass von diesem zwischengespeicherte oder aktuelle Sprachnachrichten desjenigen Funkkommunikationsgeräts weitervermittelt werden, dessen Nutzer vor allen anderen Mitgliedern der PTT-Gruppe die PTT-Taste als Nächster gedrückt hat. Auf diese Weise ähnelt der PTT-Dienst aus Nutzersicht dem bekannten "Walkie-Talkie"-Service des klassischen CB-Funks. Jedoch kann im Unterschied zu diesem jetzt das jeweilig sendeberechtigte Funkkommunikationsgerät auch von ihm weit entfernte Funkkommunikationsgeräte, die zum selben PTT-Dienst eingeschrieben sind, über das Funknetzwerk des jeweiligen Funkkommunikationssystems ansprechen. Insbesondere können sich die am jeweiligen PTT-Dienst angemeldeten Funkkommunikationsgeräte in voneinander verschiedenen Funkzellen eines Funkkommunikationssystems aufhalten.

Zweckmäßigerweise kann die maximal erlaubte Berechtigungszeitdauer für das Senderecht durch den PTT-Server auf eine obere Zeitgrenze festgesetzt sein. Dann kann der Nutzer des jeweilig sendeberechtigten Funkkommunikationsgeräts nur bis zu dieser maximal erlaubten Zeitobergrenze Sprach- oder Nutznachrichten an die übrigen beteiligten Funkkommunikationsgeräte übermitteln, auch wenn er seine PTT-Taste weiter gedrückt hält. Darüber hinaus kann das jeweilige Funkkommunikationsgerät ggf. an mehreren PTT-Services gleichzeitig beteiligt sein.

Für moderne Funkkommunikationssysteme wird insbesondere gewünscht, einen derartigen PTT-Service paketvermittelt, das heißt "Packet Switched" zu implementieren. In Funkkommunikationssystemen wird dafür vorzugsweise das sogenannte IP-Mulitmedia-Subsystem (IMS) oder ein adäquates System zur Realisierung herangezogen. Entsprechende Aktivitäten dazu werden in internationalen Standardisierungsgremien wie zum Beispiel " Open Mobile Alliance (OMA)" und "3rd Generation Project Partnership (3GPP)" durchgeführt.

Während das Voll-Duplex-Prinzip der leitungsorientierten Telefonverbindung zwischen je zwei Funkkommunikationsgeräten einen wechselseitigen, zeitgleichen Austausch von Sprachnachrichten sowie sonstigen Nutzdaten in Hin- und Rückrichtung begünstigt, unterstützt das Halb-Duplex-Verfahren eines PTT-Dienstes das sporadische Absetzen einer Sprachnachricht oder sonstiger Nutzdaten durch ein einzelnes Funkkommunikationsgerät der PTT-Gruppe dieses PTT-Dienstes gleichzeitig an alle Mitglieder dieser PTT-Gruppe lediglich in Hinrichtung. Wenn ein Mitglied der jeweiligen PTT-Gruppe eine Sprachmitteilung an alle übrigen Mitglieder dieser PTT-Gruppe durchgeben möchte, dann kann es dies zum Beispiel nach Betätigen einer speziellen PTT-Taste spontan tun. Somit werden nur dann Funksowie Funknetzwerk-Ressourcen mit entsprechender Kostenfolge genutzt, wenn tatsächlich eine Sprachnachricht innerhalb der PTT-Gruppe übermittelt wird.

Ein typischer Anwendungsfall für den PTT-Dienst tritt beispielsweise dann auf, wenn die Organisationszentrale eines Logistikunternehmens hin und wieder mit ein oder mehreren ihrer Lkw-Fahrer Kontakt aufnehmen will, um neue Instruktionen durchzugeben. Umgekehrt ist es gewünscht, dass der jeweilige Lkw-Fahrer hin und wieder mal eine kurze Sprachnachricht oder Antwort an die Organisationszentrale zurückschickt. Um diese sporadische Sprachnachricht-Übermittlung zu ermöglichen, wird während der Arbeitszeit eine PTT-Sitzung zwischen der Organisationszentrale und dem jeweiligen Lkw-Fahrer durchgängig aufrecht gehalten. Wenn einer der beteiligten Lkw-Fahrer oder die Organisationszentrale eine Sprachmitteilung an die übrigen beteiligten Mitglieder dieser PTT-Gruppe durchgeben möchte, dann kann er dies zum Beispiel jeweils nach Betätigen der PTT-Taste an seinem Funkkommunikationsgerät spontan tun. Es werden somit nur dann Funk-Ressourcen sowie Kapazitäten im Funknetzwerk belegt, wenn tatsächlich Sprachnachrichten oder Nutzdaten vom jeweilig sendeberechtigten Funkkommunikationsgerät übermittelt werden. Allgemein ausgedrückt ist dann eine PTT-Sitzung zweckmäßig, wenn zeitlich betrachtet nur ab und zu jeweils in eine bestimmte Übertragungsrichtung Sprachnachrichten oder Nutzdaten übermittelt werden. Demgegenüber wäre es in diesen Fällen zu umständlich und zu zeitaufwendig, zwischen dem jeweilig übermittlungsberechtigten Funkkommunikationsgerät und allen übrigen empfangenden Funkkommunikationsgeräten der jeweilig vorliegenden PTT-Gruppe jeweils einzelne Telefonverbindungen aufzubauen. Derartig ständig aufgebaute Telefonverbindungen wären zu teuer und würden zuviel Übertragungskapazität im Funknetzwerk und insbesondere auf der Luftschnittstelle der beteiligten Funkkommunikationsgeräte belegen.

Ist hingegen nicht nur die Übermittlung einer einzelnen Sprachnachricht vom jeweiligen Funkkommunikationsgerät zu allen übrigen Funkkommunikationsgeräten der jeweilig vorliegenden PTT-Gruppe in Hinrichtung, sondern eine wechselseitige Diskussion bzw. Gespräch zwischen mindestens zwei beteiligten Funkkommunikationsgeräten gleichzeitig in Hin- und Rückrichtung erwünscht, so sind die mit dem Halb-Duplex-Übertragungsverfahrens verbundenen Eigenschaften einer PTT-Sitzung eher nachteilig. Denn derjenige, der mit Hilfe seines Funkkommunikationsgeräts an die übrigen Funkkommunikationsgeräte einer PTT-Gruppe eine Sprachnachricht absetzen möchte, blockt während des Übertragungszeitraums die Abgabe einer Sprachnachricht durch die empfangenden Funkkommunikationsgeräte. Der Empfänger kann also den Absender nicht unterbrechen bzw. ihm nicht ins Wort fallen, wenn er gerade etwas sagt. Zudem erhält jemand, der eine Sprachnachricht absetzen möchte, die Sprechberechtigung in der Praxis nur dann, wenn er zuvor eine sogenannte PTT-Taste an seinem Funkkommunikationsgerät gedrückt hat. Dies sind Faktoren, die während einer Diskussion beziehungsweise während eines Gesprächsablaufs nachteilig sind, so dass eine Telefonieverbindung zwischen den beteiligten Funkkommunikationsgeräten geeigneter wäre.

ETSI TS 100 392-2 V2.4.1 (2003-10), Technical Specification Terrestrial Trunked Radio (TETRA); Voice plus Data (V+D); Part 2: Air Interface (AI), Kapitel 28.3.3.4.1 bis 28.3.3.4.4 beschreibt das Zusammenwirken von Paketdaten und dem individuellen leitungsvermittelten Sprachmodus und von Datenverbindungen. Allerdings offenbart das Dokument keine verschiedenen Steuereinheiten sowie deren Zusammenspiel.

Der Erfindung liegt die Aufgabe zugrunde, einen Weg aufzuzeigen, wie dem Benutzer eines Funkkommunikationsgeräts eine an die jeweilige Kommunikationssituation angepasste Kommunikationsverbindung in flexibler und komfortabler Weise bereitgestellt werden kann. Dieses Aufgabe wird durch folgendes erfindungsgemäße Verfahren gelöst:
Verfahren zum Wechsel zwischen einer paketorientierten PTT-Sitzung und einer leitungsorientierten Telefonverbindung als auswählbare Kommunikationsverbindungen zwischen mindestens einem ersten beteiligten Funkkommunikationsgerät und mindestens einem zweiten beteiligten Funkkommunikationsgerät eines Funkkommunikationssystems, wobei eine erste dieser beiden Kommunikationsverbindungen durch mindestens ein beteiligtes Funkkommunikationsgerät und/ oder durch mindestens eine Steuereinheit des Funknetzwerks des Funkkommunikationssystems ausgewählt und aufgebaut wird, und wobei von dieser bereits aufgebauten, ersten Kommunikationsverbindung zu der zweiten Kommunikationsverbindung unter Kontrolle eines an der ersten Kommunikationsverbindung beteiligten Funkkommunikationsgeräts und/oder der an der ersten Kommunikationsverbindung beteiligten Steuereinheit des Funknetzwerks des Funkkommunikationssystems gewechselt wird, indem noch während des Bestehens der ersten Kommunikationsverbindung die Aktivierung der zweiten Kommunikationsverbindung vorgenommen wird.

Indem noch während des Bestehens der ersten Kommunikationsverbindung die Aktivierung der zweiten Kommunikationsverbindung vorgenommen wird, kann zwischen den beiden Kommunikationsverbindungen weitgehend übergangslos gewechselt werden: Je nach vorliegender Kommunikationssituation kann der Bediener des jeweilig beteiligten Funkkommunikationsgeräts die situativ günstigere der beiden Kommunikationsverbindungsarten auswählen und zu dieser wechseln. Dadurch, dass noch während der jeweilig bestehenden ersten Kommunikationsverbindung bereits die Aktivierung der zweiten Kommunikationsverbindung eingeleitet wird, wird dem Benutzer des jeweiligen Funkkommunikationsgeräts ein weitgehend nahtloser Übergang von der ersten zur zweiten Kommunikationsverbindung ermöglicht. Im Einzelnen kann von einer bereits bestehenden, paketorientierten PTT-Sitzung zwischen mindestens einem ersten Funkkommunikationsgerät und mindestens einem zweiten Funkkommunikationsgerät zu einer leitungsorientierten Telefonverbindung zwischen diesen beteiligten Funkkommunikationsgeräten noch während der PTT-Sitzung bzw. Phase weitgehend übergangslos umgeschaltet werden. Umgekehrt kann während einer aufgebauten, schon bestehenden leitungsorientierten Telefonverbindung zwischen mindestens einem ersten und mindestens einem zweiten Funkkommunikationsgerät weitgehend übergangslos zu einer paketorientierten PTT-Sitzung umgeschaltet werden, indem noch während der bestehenden, leitungsorientierten Telefonverbindung schon die Aktivierung der gewünschten PTT-Sitzung vorgenommen wird. Auf diese Weise kann der jeweilige Benutzer flexibel und komfortabel diejenige Kommunikationsverbindungsart auswählen, die spezifischer für seine jeweils aktuell vorliegende Kommunikationssituation passt, d.h. von ihm kann diejenige Kommunikationsart ausgewählt werden, die sich für eine spezifische Kommunikationssituation besser eignet. Dadurch kann er seine jeweilige Kommunikationsverbindung auf veränderte Kommunikationsanforderungen hin individuell abstellen.

Vorteilhaft kann es insbesondere sein, wenn von dem ersten Funkkommunikationsgerät an das zweite Funkkommunikationsgerät über die bereits aufgebaute, erste Kommunikationsverbindung mindestens ein Steuersignal übermittelt wird, mit dem dem zweiten Funkkommunikationsgerät der Wechselwunsch des ersten Funkkommunikationsgeräts von der bereits aufgebauten, ersten Kommunikationsverbindung zur zweiten Kommunikationsverbindung mitgeteilt wird. Zusätzlich oder unabhängig hiervon kann es zweckmäßig sein, von dem ersten und/oder dem zweiten Funkkommunikationsgerät der bereits aufgebauten, ersten Kommunikationsverbindung an diejenige Steuereinheit, die für die aufgebaute, erste Kommunikationsverbindung zuständig ist, mindestens ein Steuersignal zu übermitteln, mit dem dieser Steuereinheit der Wechselwunsch des ersten und/oder zweiten Funkkommunikationsgeräts von der ersten Kommunikationsverbindung zur zweiten Kommunikationsverbindung mitgeteilt wird. Zusätzlich oder unabhängig hiervon kann es vorteilhaft sein, wenn von dem ersten und/oder dem zweiten Funkkommunikationsgerät der bereits aufgebauten, ersten Kommunikationsverbindung an diejenige Steuereinheit, die für die aufzubauende zweite Kommunikationsverbindung zuständig ist, mindestens ein Steuersignal übermittelt wird, mit dem dieser Steuereinheit der Wechselwunsch des ersten und/oder zweiten Funkkommunikationsgeräts von der ersten Kommunikationsverbindung zur zweiten Kommunikationsverbindung mitgeteilt wird. Ggf. kann es auch zweckmäßig sein, wenn von der Steuereinheit der bereits aufgebauten, ersten Kommunikationsverbindung das Steuersignal über den Wechselwunsch des ersten und/oder zweiten Funkkommunikationsgeräts an diejenige Steuereinheit übermittelt wird, die für die Aktivierung und den Aufbau der zweiten Kommunikationsverbindung zuständig ist.

In vorteilhafter Weise werden in ein derartiges Steuersignal ein oder mehrere Adressparameter des an der ersten Kommunikationsverbindung beteiligten Funkkommunikationsgeräts, an das der Wechselwunsch gerichtet wird, und/oder des an der ersten Kommunikationsverbindung beteiligten Funkkommunikationsgeräts, von dem der Wechselwunsch ausgeht, und/oder mindestens ein Identifikationsparameter zur Kennzeichnung der bereits aufgebauten, ersten Kommunikationsverbindung für die aufzubauende, zweite Kommunikationsverbindung eingefügt. Anhand des Identifikationsparameters im Steuersignal wird die bereits aufgebaute, erste Kommunikationsverbindung der noch aufzubauenden, zweiten Kommunikationsverbindung zugeordnet, so dass eine eindeutige Verknüpfung zwischen der bereits aufgebauten, ersten Kommunikationsverbindung und der gewünschten, zweiten Kommunikationsverbindung bewirkt wird.

Dadurch ist eine Assoziation bzw. Verknüpfung zwischen den beiden Kommunikationsverbindungen bereitgestellt, die eine eindeutige Zuordnung bzw. Relation zueinander erlaubt. Der Identifikationsparameter repräsentiert dabei als Verknüpfungs- bzw. Verkettungsparameter die bereits aufgebaute, erste Kommunikationsverbindung, die durch die neue, zweite Kommunikationsverbindung aufgrund des Wechselwunsches des Nutzers eines der an der ersten Kommunikationsverbindung beteiligten Funkkommunikationsgeräte abgelöst werden soll. Auf diese Weise ist es ermöglicht, insbesondere dem jeweiligen Funkkommunikationsgerät, an das der Wechselwunsch gerichtet wird, und/oder der Steuereinheit, die für die neue, zweite Kommunikationsverbindung zuständig ist, zu indizieren, dass die schon bestehende, erste Kommunikationsverbindung zur zweiten Kommunikationsverbindung gehört, zu der gerade gewechselt wird. Dies ist z.B. dann vorteilhaft, wenn vom PTT-Service zur Telefonverbindung zwischen zwei beteiligten Funkkommunikationsgeräten gewechselt wird, und gleichzeitig bei einem der beteiligten Funkkommunikationsgeräte ein Telefonanruf von einem dritten, am PTT-Service unbeteiligten Funkkommunikationsgerät eingeht. Aufgrund des Identifikationsparameters wird dann dem betroffenen Funkkommunikationsgerät diejenige Telefonverbindung in eindeutiger Weise indiziert, die der vorausgehenden PTT-Sitzung zugeordnet ist. Dadurch ist eine Art Filterfunktion bewirkt, die es dem jeweiligen Funkkommunikationsgerät ermöglicht, herauszufinden bzw. zu unterscheiden, welcher der parallel eingehenden Telefonanrufe tatsächlich zur vorher bestehenden PTT-Sitzung gehört. In analoger Weise wird auch die Verknüpfung bzw. der Zusammenhang zwischen einer bereits aufgebauten Telefonverbindung zwischen mindestens zwei Funkkommunikationsgeräten und einer nachfolgenden, spezifischen PTT-Sitzung unter Beteiligung derselben Funkkommunikationsgeräte beim Wechsel von der Telefonverbindung zur PTT-Sitzung durch Übergabe eines Identifikationsparameters für die Telefonverbindung der Steuereinheit, die für die zweite Kommunikationsverbindung zuständig ist, und/oder demjenigen Funkkommunikationsgerät der ersten Kommunikationsverbindung mitgeteilt, an das der Wechselwunsch gerichtet und/oder von dem dieser ausgelöst wird. Der jeweilig übergebene Identifikationsparameter als Repräsentant für die erste Kommunikationsverbindung erlaubt in besonders vorteilhafter und komfortabler Weise einen automatisierten Wechsel zur neuen gewünschten, zweiten Kommunikationsverbindung, ohne dass es für den Nutzer des Funkkommunikationsgeräts, an den der Wechselwunsch gerichtet ist, erforderlich ist, selbst aktiv eingreifen.

Zweckmäßigerweise wird der Identifikationsparameter an das Funkkommunikationsgerät übermittelt, an das der Wechselwunsch seitens eines anderen, an der ersten Kommunikationsverbindung beteiligten Funkkommunikationsgeräts gerichtet wird. Wird der Wechsel von einer Steuereinheit im Funknetzwerk aktiviert und kontrolliert, so ist es zweckmäßig, den Identifikationsparameter auch sämtlichen Funkkommunikationsgeräten zuzusenden, die an der ersten Kommunikationsverbindung beteiligt sind und jetzt vom Wechsel zur zweiten Kommunikationsverbindung betroffen sind.

Die Erfindung betrifft auch ein Funkkommunikationsgerät mit einer Steuereinheit zur Durchführung des erfindungsgemäßen Verfahrens.

Weiterhin betrifft die Erfindung auch eine Netzwerkkomponente mit einer Steuereinheit zur Durchführung des erfindungsgemäßen Verfahrens.

Darüber hinaus betrifft die Erfindung auch ein Funkkommunikationssystem mit einer ersten Gruppe von Netzwerkkomponenten zur Auswahl und Bereitstellung einer paketorientierten PTT-Sitzung sowie mit einer zweiten Gruppe von Netzwerkkomponenten zur Auswahl und Bereitstellung einer leitungsorientierten Telefonverbindung als auswählbare Kommunikationsverbindungen zwischen mindestens einem ersten beteiligten Funkkommunikationsgerät und mindestens einem zweiten beteiligten Funkkommunikationsgerät eines Funkkommunikationssystems, wobei die beiden Gruppen von Netzwerkkomponenten jeweils Steuermittel zur Durchführung des erfindungsgemäßen Verfahrens aufweisen.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:

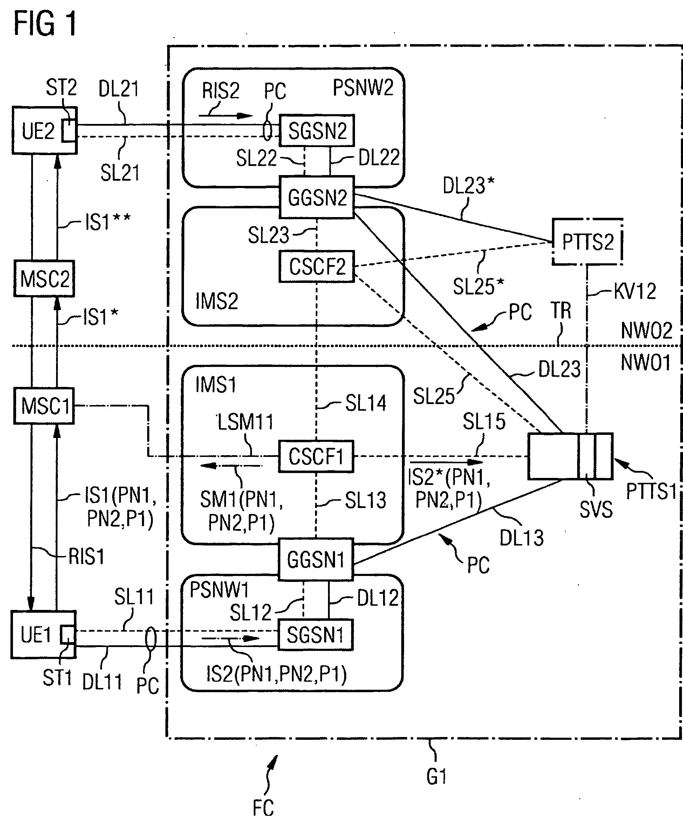

- Figur 1: in schematischer Darstellung die Hauptkomponenten der Netzwerkarchitektur eines Funkkommunikationssystems zum Aufbau einer paketorientierten PTT-Sitzung zwischen mindestens zwei Funkkommunikationsgeräten, von der aus nach verschiedenen Varianten des erfindungsgemäßen Verfahrens zu einer leitungsorientierten Telefonverbindung zwischen zwei beteiligten Funkkommunikationsgeräten gewechselt wird,

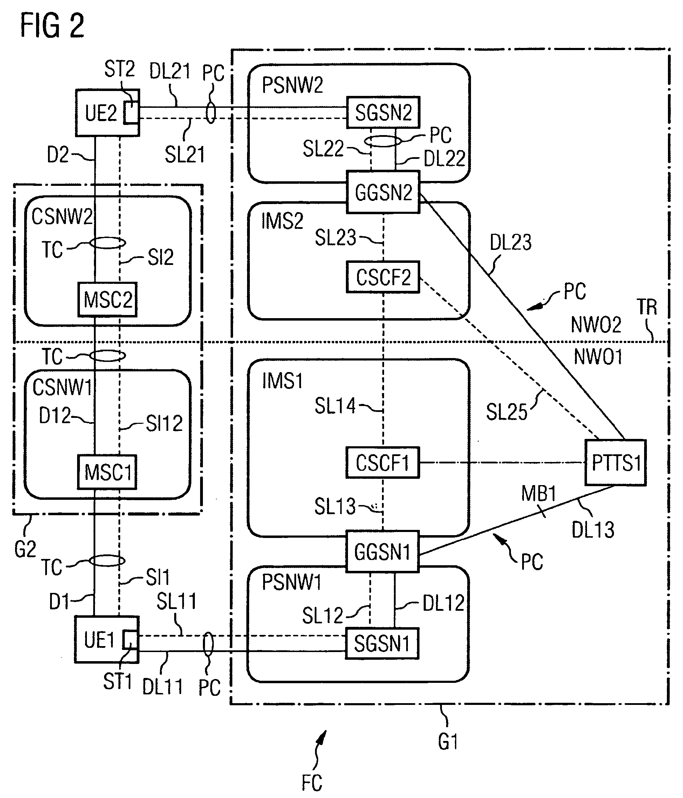

- Figur 2: in schematischer Darstellung zusätzliche Netzwerkkomponenten in der Netzwerkarchitektur von Figur 1, mit deren Hilfe sich gleichzeitig, d.h. parallel zur bereits aufgebauten, paketorientierten Kommunikationsverbindung zwischen den beiden Funkkommunikationsgeräten eine leitungsorientierte Kommunikationsverbindung nach verschiedenen Varianten des erfindungsgemäßen Verfahrens aufbauen lässt,

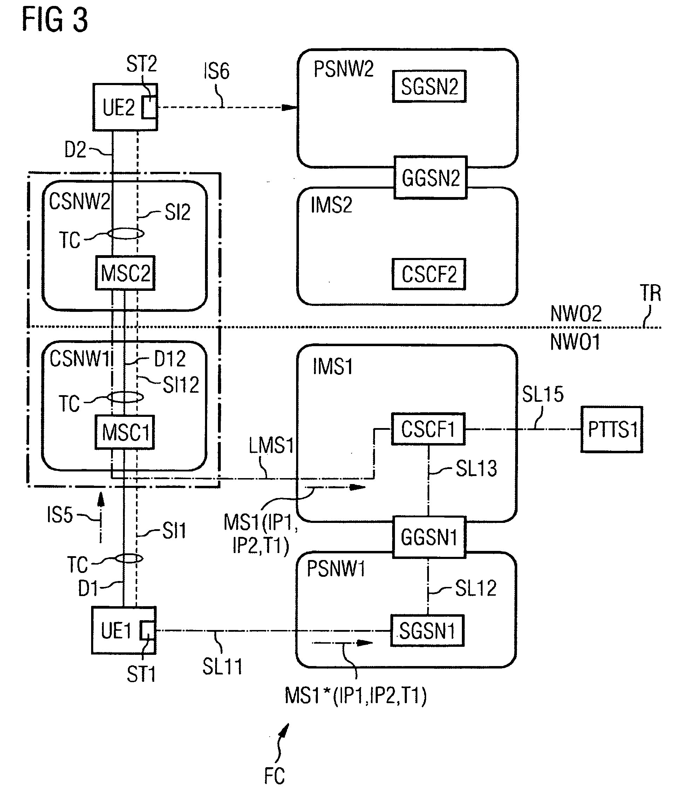

- Figur 3: in schematischer Darstellung die gewünschte leitungsorientierte Telefonverbindung als neue, zweite Kommunikationsverbindung zwischen den beiden Funkkommunikationsgeräten von Figur 2 nach Abbau bzw. Beendigung der PTT-Sitzung,

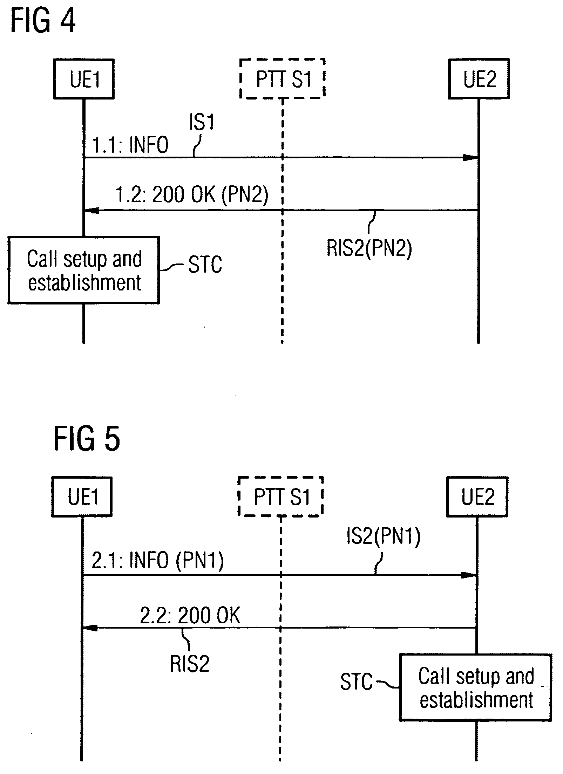

- Figuren 4, 5: jeweils in schematischer Darstellung den Austausch von Benachrichtigungs- und Steuersignalen über die Funkschnittstellen der beiden Funkkommunikationsgeräte von Figur 1, um deren Wechsel von der bestehenden, paketorientierten PTT-Sitzung zu der leitungsorientierten Telefonverbindung einzuleiten,

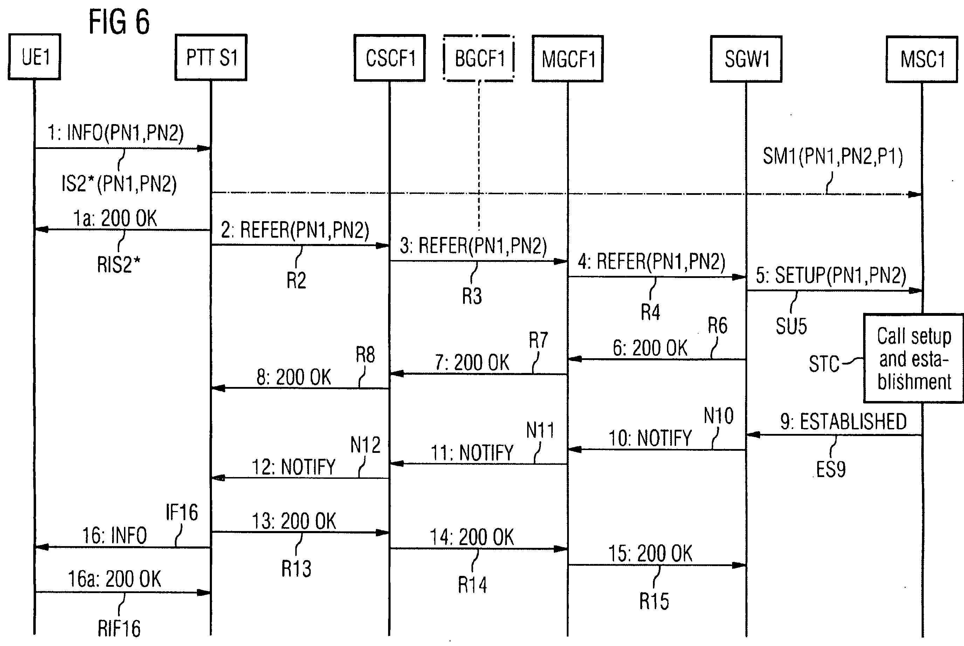

- Figur 6: in schematischer Darstellung den Signalisierungsfluss von Informations- und Steuersignalen zwischen Komponenten des Funknetzwerks von Figur 1 und dem Funkkommunikationsgerät, das den Wechselwunsch von der PTT-Sitzung zur leitungsorientierten Telefonverbindung hat, zur Durchführung einer weiteren Variante des erfindungsgemäßen Verfahrens,

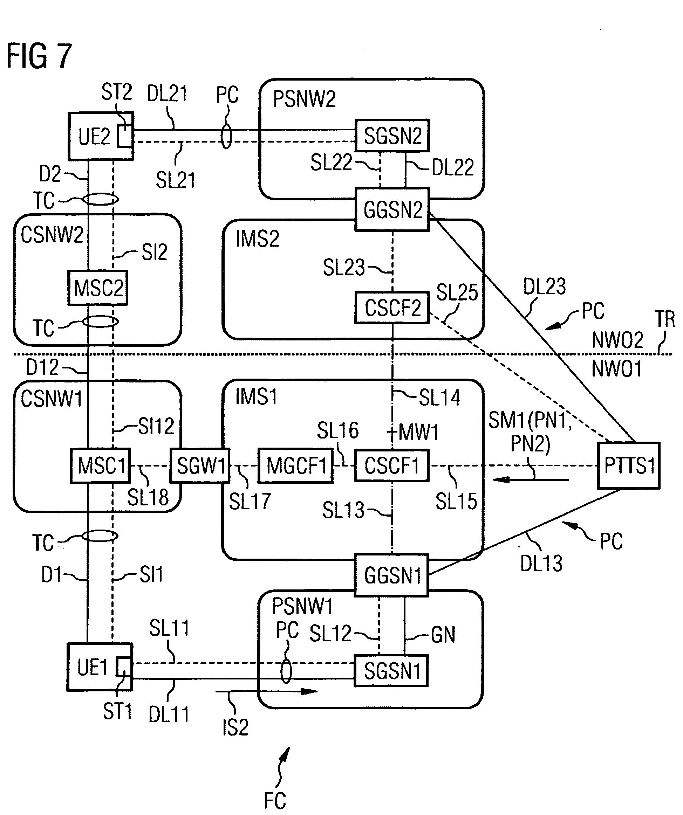

- Figur 7: in schematischer Darstellung Komponenten der Netzwerkarchitektur von Figur 1 und Figur 2 zum Wechsel von einer paketorientierten PTT-Sitzung zu einer leitungsorientierten Telefonverbindung zwischen zwei beteiligten Funkkommunikationsgeräten, wobei nach einer weiteren Variante des erfindungsgemäßen Verfahrens das Umschalten zwischen diesen beiden Kommunikationsverbindungsarten durch eine Steuereinheit des PTT-Dienstes kontrolliert wird, und

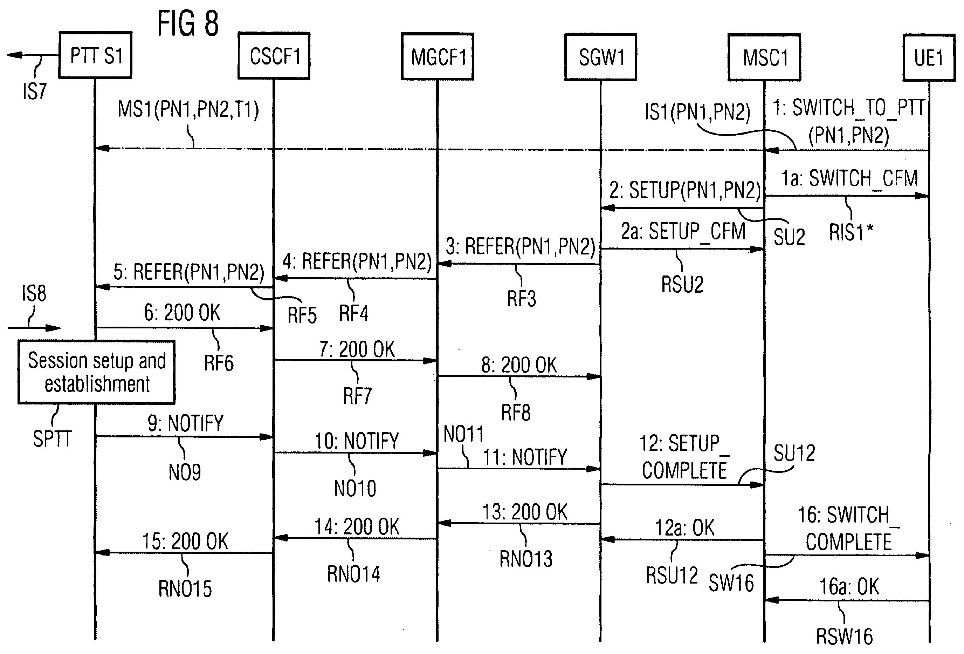

- Figur 8: in schematischer Darstellung den Signalfluss zwischen den Netzwerkkomponenten der Funknetzwerkarchitektur von Figur 1 und Figur 2 und dem ersten Funkkommunikationsgerät von Figur 1, von dem der Wechselwunsch von seiner bisher leitungsorientierten Telefonverbindung zu einer paketorientierten PTT-Sitzung nach einer weiteren Variante des Verfahrens ausgeht.

Elemente mit gleicher Funktion und Wirkungsweise sind in den Figuren 1 mit 8 jeweils mit denselben Bezugszeichen versehen.

Figur 1 zeigt schematisch Hauptkomponenten einer Netzwerkarchitektur als Bestandteil eines Funkkommunikationssystems FC, mit deren Hilfe beispielhaft für zwei Funkkommunikationsgeräte UE1, UE2 ein PTT-Dienst PC als erste Kommunikationsverbindungsart bereitgestellt wird. Dabei ist das erste Funkkommunikationsgerät UE1 über Netzwerkkomponenten wie z.B. PSNW1, IMS1, MSC1 eines ersten Netzwerkoperators bzw. Netzwerkproviders NWO1 sowie das zweite Funkkommunikationsgerät UE2 über Netzwerkkomponenten PSNW2, IMS2, MSC2 eines zweiten Netzwerkoperators NW02 mit einem gemeinsamen PTT-Server PTTS1 verbunden. Dieser steuert den Austausch von Sprach- und/oder sonstigen Nutznachrichten zwischen den beiden Funkkommunikationsgeräten UE1, UE2 entsprechend dem bekannten "Push-to-Talk"-Prinzip. Die Zugehörigkeit des jeweiligen Funkkommunikationsgeräts UE1 bzw. UE2 sowie der ihm netzwerkseitig zugeordneten Komponenten zum jeweiligen Netzwerkoperator NWO1 bzw. NW02 ist in der Figur 1 durch eine punktierte Trennlinie TR veranschaulicht. Signalisierungsverbindungen zwischen dem jeweiligen Funkkommunikationsgerät und dem ihm netzwerkseitig zugeordneten Netzwerkkomponenten des jeweiligen Netzwerkoperators sind in der Figur 1 gestrichelt, während zugehörige, separate Datenverbindungen mittels durchgezogener Linien dargestellt sind.

Im Einzelnen hat das erste Funkkommunikationsgerät UE1 über ein sogenanntes "Radio Access Network" bzw. Funkzugriffsnetzwerk, das hier in der Figur 1 der zeichnerischen Übersichtlichkeit halber weggelassen worden ist, Zugang zu einem ihm netzwerkseitig zugeordneten "Packet Switched Network", das heißt paketorientierten Funknetzwerk PSNW1 seines Providers NWO1. Ein derartiges "Packet Switched Network" kann beispielsweise durch ein GPRS (General Packet Radio Service)-Netzwerk gebildet sein. Es weist als Hauptkomponenten ein sogenanntes SGSN (Serving GPRS Support Node)-Element, d.h. einem GPRS Netzwerkknoten SGNS1 sowie ein sogenanntes GGSN (Gateway GPRS Support Node)-Element bzw. Gateway GGSN1 auf. Das erste Funkkommunikationsgerät UE1 ist mit dem SGSN-Element SGSN1 des "Packet Switched Network" PSNW1 über eine Kommunikationsverbindung SL11 zur Übermittlung von Steuer-bzw. Signalisierungssignalen sowie über eine Kommunikationsverbindung DL11 zur Übermittlung von Nutzdaten verbunden. Steuersignale werden zwischen dem SGSN-Element SGSN1 und dem GGSN-Element GGSN1 über eine Signalisierungsverbindung SL12, sowie Daten über eine Datenverbindung DL12 ausgetauscht. Über das GGSN-Element GGSN1 ist eine Signalisierungsverbindung SL13 zum CSCF("Call State Control Funktion")-Element CSCF1 eines sogenannten "IP Multimedia Subsystems (IMS)" IMS1 vorhanden. Dieses Subsystem ist ein Funknetzwerkteil, das nach dem IP-Protokoll den Kommunikationsverkehr zwischen dem Funkkommunikationsgerät UE1 und dem PTT-Server PTTS1 kontrolliert. Die CSCF-Komponente CSCF1 hat wiederum eine Signalisierungsverbindung SL15 zum PTT-Server PTTS1. Auf diese Weise hat die GGSN-Komponente GGSN1 indirekt über die CSCF-Komponente CSCF1 zum PTT-Server PTTS1 eine Signalisierungsverbindung. Daneben weist sie eine direkte, separate Datenverbindung DL13 zum PTT-Server PTTS1 auf.

In analoger Weise kommuniziert das zweite Funkkommunikationsgerät UE2 über eine Signalisierungsverbindung SL21 sowie eine Datenverbindung DL21 mit der SGSN-Komponente SGSN2 eines "Packet Switched Network", d.h. paketvermittelnden Netzwerkteils PSNW2 seines Providers NW02. Diese SGSN-Komponente SGSN2 tauscht Steuersignale über eine eigene Verbindung SL22 sowie Datensignale über eine eigene Datenverbindung DL22 mit einer GGSN-Komponente GGSN2 aus, die ein Gateway, das heißt einen Zugang zum "IP Multimedia Subsystem" IMS2 bereitstellt. Über die GGSN-Komponente GGSN2 ist eine direkte Datenverbindung DL23 zum gemeinsamen PTT-Server PTTS1 vorhanden. Jede Signalisierung im "IP Multimedia Subsystem" IMS2 geht über eine CSCF-Komponente CSCF2, die ein Kernelement des "IP Multimedia Subsystems" IMS2 darstellt. Dazu hat die GGSN-Komponente GGSN2 eine Signalisierungsverbindung SL23 zur CSCF-Komponente CSCF2. Über die CSCF-Komponente CSCF2 wird mittels einer Signalisierungsverbindung SL25 auch der gemeinsame PTT-Server PTTS1 angesprochen. Mit Hilfe der CSCF-Komponente CSCF2 können ggf. auch weitere Applikationsserver gesteuert werden.

Vorzugsweise wird für die Signalisierung zwischen den beiden Funkkommunikationsgeräten UE1, UE2 und dem gemeinsamen PTT-Server PTTS1 sowie den zwischengeschalteten Netzwerkkomponenten SGSN1, GGSN1, CSCF1, CSCF2, GGSN2, SGSN2 das sogenannte SIP-Protokoll (Session Initiation Protocol) verwendet.

Hat zum Beispiel der Benutzer des ersten Funkkommunikationsgeräts an diesem die PTT-Taste als Erster ausgelöst, so teilt ihm der PTT-Server PTTS1 für eine maximale Berechtigungszeitdauer eine Sendeberechtigung zu, innerhalb der er eine Sprachnachricht oder sonstige Nutzdaten unter Zwischenvermittlung des gemeinsamen PTT-Servers PTTS1 an das zweite Funkkommunikationsgerät UE2 übermitteln kann. Während der Belegung des Übermittlungs- bzw. Senderechts durch das erste Funkkommunikationsgerät UE1 ist dem zweiten Funkkommunikationsgerät UE2 die Versendeberechtigung durch den PTT-Server PTTS1 entzogen, so dass es lediglich Nachrichten empfangen kann. Nach Beendigung der Übermittlung von Sprach- oder Nutzdaten durch das erste Funkkommunikationsgerät UE1, was insbesondere durch Loslassen dessen PTT-Taste bewirkt wird, nimmt der PTT-Server PTTS1 dem ersten Funkkommunikationsgerät UE1 die Sendeberechtigung weg. Dies bedeutet, dass das erste Funkkommunikationsgerät UE1 zwar noch Sprachnachrichten oder sonstige Nutznachrichten an den PTT-Server PTTS1 als Paketdaten übermitteln kann, der PTT-Server PTTS1 deren Weiterleitung an das zweite Funkkommunikationsgerät UE2 jedoch blockiert und diese Paketdaten verwirft. Alternativ können diese Paketdaten solange zwischengespeichert werden, bis der PTT-Server PTTS1 dem ersten Funkkommunikationsgerät auf erneute Anforderung dessen Nutzers die Sendeberechtigung wieder zuteilt. Dies setzt voraus, dass der Nutzer des zweiten Funkkommunikationsgeräts UE2 nicht bereits vorher die Berechtigung eingeholt hat und noch spricht.

Allgemein betrachtet kann der Bediener des jeweiligen Funkkommunikationsgeräts durch Drücken der PTT-Taste an seinem Funkkommunikationsgerät vom PTT-Server die alleinige Sendeberechtigung anfordern, um eine Nachricht an andere beteiligte Funkkommunikationsgeräte vereinzelt zu übermitteln. Daraufhin vergibt der PTT-Server diesem anfragenden Funkkommunikationsgerät die alleinige Sendeberechtigung für eine vorgebbare Berechtigungszeitdauer, wenn nicht eine anderes beteiligtes Funkkommunikationsgerät einen früheren Zeitrang für seine Berechtigungsanfrage hat. Auf diese Weise ist jeweils nur einem der am PTT-Service teilnehmenden Funkkommunikationsgeräte während derselben Zeit durch den PTT-Server das alleinige Senderecht zugeordnet. Dabei kontrolliert der PTT-Server die Weitervermittlung von Nachrichten des sendeberechtigten Funkkommunikationsgeräts. Es ist also nur dem jeweilig übermittlungsberechtigten Funkkommunikationsgerät das Absetzen einer Nachricht mittels Durchschalten des gemeinsamen PTT-Servers ermöglicht, während die ein oder mehreren übrigen, am PTT-Service teilnehmenden Funkkommunikationsgeräte diese Nachricht lediglich empfangen und ihrerseits nicht zeitgleich in Gegenrichtung Sprachnachrichten an die beteiligten Funkkommunikationsgeräte übermitteln können. Aufgrund der Paketdatenübertragung ist ihnen allerdings ermöglicht, bis zum gemeinsamen PTT-Server Nachrichten zu übermitteln. Dort werden ihre etwaig eintreffenden Nachrichten entweder verworfen oder zwischengespeichert, bis dem gerade sendeberechtigten Funkkommunikationsgerät die Sendeberechtigung seitens des PTT-Servers wieder entzogen wird. Während des Übermittlung der Nachrichten des gerade sendeberechtigten Funkkommunikationsgeräts in Hinrichtung zu den anderen beteiligten Funkkommunikationsgeräten vermittelt also der PTT-Server Nachrichten von diesen nicht in Gegenrichtung durch. Während der Bediener des jeweilig übermittlungsberechtigten Funkkommunikationsgeräts spricht, können die Nutzer der ein oder mehreren übrigen teilnehmenden Funkkommunikationsgeräte lediglich zuhören und den sprechenden Nutzer des übermittlungsberechtigten Funkkommunikationsgeräts während des Absetzens seiner Sprachnachricht nicht unterbrechen.

Ggf. kann anstelle des PTT-Servers PTTS1, der den Funknetzwerkteilen der beiden Providers NWO1, NW02 gemeinsam zugeordnet ist, jeweils ein eigener, separater PTT-Server für jedes Funknetzwerkteil der beiden Provider NWO1, NW02 vorgesehen sein. Im einzelnen ist dann dem "IP Multimedia Subsystem" IMS1 sowie dem "packet switched network" PSNW1 des ersten Providers NWO1 der PTT-Server PTTS1 allein zugeordnet, während dem "IP Multimedia Subsystem" IMS2 sowie dem "packet switched network" PSNW2 des zweiten Providers NW02 ein eigener PTT-Server PTTS2 spezifisch zugeteilt ist. Dieser ist in der Figur 1 zusätzlich strichpunktiert eingezeichnet. Er weist eine Signalisierungsverbindung SL25* zur CSCF-Komponente CSCF2 und eine Datenverbindung DL23* zur GGSN2-Komponente GGSN2 analog zum Kommunikationsverbindungsschema beim PTT-Server PTTS1 auf. Die beiden PTT-Server PTTS1, PTTS2 haben ihrerseits eine gemeinsame Kommunikationsverbindung KV12 untereinander, über die Daten und/oder Steuersignale übertragen werden können. Die Verbindungen DL23 und SL25 zum ersten PTT-Server PTTS1 können dann zweckmäßigerweise entfallen. Vorzugsweise hat derjenige PTT-Server die Kontrolle über die PTT-Sitzung, der für das Funkkommunikationsgerät zuständig ist, das die PTT-Sitzung initiiert bzw. eingeleitet hat. Hier im Ausführungsbeispiel von Figur 1 ist die PTT-Sitzung PC vom Funkkommunikationsgerät UE1 ausgelöst worden und daher der von seinem Provider NWO1 netzwerkseitig spezifisch zugeordnete PTT-Server PTTS1 für die Kontrolle des Ablaufs der PTT-Sitzung PC zuständig. Der zweite PTT-Server PTTS2 bildet dabei eine passive Komponente und dient lediglich dem bloßen Weiterleiten der vom ersten, steuernden PTT-Server PTTS1 verschickten Sprachnachrichten oder Nutzdaten zum zweiten Funkkommunikationsgerät UE2.

Selbstverständlich ist es auch möglich, dass der zweite, empfangsseitig zugeordnete PTT-Server PTTS2 anstelle des ersten, sendeseitigen PTT-Servers PTTS1 die Nachrichtenübermittlung zum zweiten Funkkommunikationsgerät UE2 steuert bzw. koordiniert. Dazu leitet der erste PTT-Server PTTS1 die vom ersten Funkkommunikationsgerät UE1 abgesetzten Sprachnachrichten über die Kommunikationsverbindung KV12 an den zweiten PTT-Server PTTS2 unmittelbar durch, der dann deren Zustellung aktiv regelt bzw. kontrolliert.

Es kann nun vorkommen, dass die Benutzer der beiden Funkkommunikationsgeräte UE1, UE2 nicht nur vereinzelte Sprachnachrichten ab und zu einander übermitteln, sondern ein wechselseitiges, fortlaufendes Gespräch oder eine Diskussion miteinander führen möchten. Da sich für diese veränderte Kommunikationsanforderung eine normale Telefonverbindung besser eignet, wird noch während der bestehenden PTT-Sitzung PC die Aktivierung einer leitungsorientierten Telefonverbindung zwischen den am PTT-Service PC beteiligten Funkkommunikationsgeräten UE1, UE2 eingeleitet. Allgemein betrachtet wird also während einer laufenden PTT-Sitzung zwischen zwei oder mehreren teilnehmenden Funkkommunikationsgeräten zu einer normalen Telefonverbindung zwischen diesen teilnehmenden Funkkommunikationsgeräten gewechselt. Dabei ist die PTT-Sitzung vorzugsweise im sogenannten "Packet Switched Domain", d.h. im paketorientierten Netzwerkteil, über das "IP Multimedia Subsystem" realisiert, während die normale Telefonverbindung in der sogenannten "Public Switched Telephone Network Domain (cicuit switched)", d.h. im leitungsorientierten Netzwerkteil implementiert ist.

Im vorliegenden Ausführungsbeispiel von Figur 1 mit dem gemeinsamen PTT-Server PTTS1 leitet beispielsweise das erste Funkkommunikationsgerät UE1 den Wechsel von der schon aufgebauten, das heißt bestehenden PTT-Sitzung PC in eine leitungsorientierte Telefonverbindung TC zum zweiten Funkkommunikationsgerät UE2 dadurch ein, dass es seinen Wechselwunsch dem zweiten, an der PTT-Sitzung teilnehmenden Funkkommunikationsgerät UE2 durch ein Steuer- bzw. Benachrichtigungssignal IS1 mitteilt. In diesem Steuersignal IS1 sendet das erste Funkkommunikationsgerät UE1 einer für den Provider NWO1 netzwerkseitig zuständigen Vermittlungseinheit MSC1 im leitungsorientierten Netzwerkteil vorzugsweise seine eigene Telefonnummer PN1 sowie insbesondere die Telefonnummer PN2 des anzurufenden, zweiten Funkkommunikationsgeräts UE2 mit. Die Vermittlungseinheit MSC1 übermittelt daraufhin ein entsprechendes Steuersignal IS1* mit den Telefonnummern PN1, PN2 an eine empfangsseitig zuständige Vermittlungseinheit MSC2 im leitungsorientierten Netzwerkteil des zweiten Providers NW02, dem das zweite Funkkommunikationsgerät UE2 zugeordnet ist. Die Vermittlungseinheit MSC2 fragt mit einem Anfragesignal IS1** beim Nutzer des zweiten Funkkommunikationsgeräts UE2 an, ob es den Wechselwunsch des ersten Funkkommunikationsgeräts akzeptiert. Dies quittiert der Nutzer des zweiten Funkkommunikationsgeräts mit einem Antwortsignal RIS1, das von den Vermittlungseinheiten MSC1, MSC2 an das anfragende Funkkommunikationsgerät UE1 zurückübertragen wird. Erst mit positiver Bestätigung des Wechselwunsches seitens des zweiten Funkkommunikationsgeräts UE2 wird eine leitungsorientierte Telefonverbindung in Hin- und Rückrichtung durch die Vermittlungseinheiten MSC1, MSC2 zwischen den beiden Funkkommunikationsgeräten zur Verfügung gestellt. Das erste Funkkommunikationsgerät UE1 kann also mit Hilfe der Netzwerkkomponenten, die für eine leitungsorientierte Telefonverbindung zuständig sind, den Aufbau einer normalen Telefonverbindung zum zweiten Funkkommunikationsgerät UE2 einleiten. In der Figur 1 sind der zeichnerischen Übersichtlichkeit halber stellvertretend für die Komponenten des leitungsorientierten Teils des Funknetzwerks lediglich die Vermittlungseinheiten, insbesondere die sogenannten "Mobile Switching Center" MSC1, MSC2 als Hauptkomponenten eingezeichnet. Dabei ist die Vermittlungseinheit MSC1 dem ersten Funkkommunikationsgerät zugeordnet, während die zweite Vermittlungseinheit MSC2 das zweite Funkkommunikationsgerät UE2 bedient.

Ggf. kann die sendeseitig und/oder empfangsseitig zugeordnete Vermittlungseinheit MSC1, MSC2 auch sofort ohne Rücksprache beim Nutzer des zweiten Funkkommunikationsgeräts UE2, an das der Wechselwunsch des ersten Funkkommunikationsgeräts UE1 gerichtet ist, automatisch in Hin- und Rückrichtung eine leitungsorientierte Telefonverbindung aufbauen. Mit anderen Worten ausgedrückt heißt das, dass das Funkkommunikationsgerät mit Wechselwunsch zur leitungsorientierten Telefonverbindung diese unmittelbar unter Zuhilfenahme der Vermittlungseinheiten MSC1, MSC2 zum zweiten Funkkommunikationsgerät UE2 aufbauen kann, ohne dass es das Anfragesignal IS1** an das zweite Funkkommunikationsgerät UE2 zu schicken braucht. Zur Aktivierung reicht es, wenn das erste Funkkommunikationsgerät UE1 lediglich das Steuersignal IS1 an seine zuständige Vermittlungseinheit MSC1 sendet, die daraufhin alle weiteren Schritte zum Aufbau der leitungsorientierten Telefonverbindung durchführt. Dies ist möglich, da der Vermittlungseinheit MSC1 die Telefonnummer PN2 des zweiten Funkkommunikationsgeräts UE2 im Steuersignal IS1 mit übergeben wird.

Wenn bereits eine sogenannte SIP-Sitzung (Session Initiation Protocol) zwischen den beiden Funkkommunikationsgeräten UE1, UE2 über die netzwerkseitig zuständigen "IP Multimedia Subsysteme" IMS1, IMS2 besteht, kennt das erste Funkkommunikationsgerät UE1 bereits die SIP-Adresse des zweiten Funkkommunikationsgeräts UE2 und kann deshalb das Steuer- bzw. Benachrichtigungssignal IS2 auf direktem Übertragungsweg ohne Zwischenschaltung des PTT-Servers PTTS1 mit Hilfe des SIP-Protokolls über die Komponenten CSCF1, CSCF2 an das zweite Funkkommunikationsgerät UE2 übermitteln. Ggf. kann das Wechseln wollende Funkkommunikationsgeät UE1 auch aus der ihm bekannten Telefonnummer des zweiten Funkkommunikationsgeräts UE2 eine sogenannte "TelURI" als SIP-Adresse bilden, wenn diese netzwerkseitig hinterlegt ist. Diese SIP-Adressenbildung für den zweiten Teilnehmer kann insbesondere aus der bekannten Telefonnummer des zweiten Funkkommunikationsgeräts durch eine Netzwerkkomponente wie z.B. dem gemeinsamen PTT-Server PTTS1 vorgenommen werden. Vorzugsweise wird das Steuersignal mit dem Wechselwunsch des Bedieners des ersten Funkkommunikationsgeräts UE1 auch über den PTT-Server PTTS1 zum zweiten Funkkommunikationsgerät UE2 geleitet, so dass dieser Kenntnis davon hat. Dieses Benachrichtigungssignal ist in der Figur 1 zusätzlich strichpunktiert eingezeichnet und mit dem Bezugszeichen IS2* versehen. Akzeptiert nun der Bediener des zweiten Funkkommunikationsgeräts UE2 den Wechselwunsch des Bedieners des ersten Funkkommunikationsgeräts UE1, so sendet er diesem ein Bestätigungssignal RIS1 zurück. Die Generierung des Bestätigungssignals RIS2 kann dabei aktiv durch den Benutzer des zweiten Funkkommunikationsgeräts erfolgen. Genauso kann es zweckmäßig sein, dass das zweite Funkkommunikationsgerät UE2 das Bestätigungssignal RIS2 selbständig (ohne Nachfrage bei seinem Benutzer) erzeugt und an das anfragende, erste Funkkommunikationsgerät UE1 zurück überträgt.

Zusätzlich oder unabhängig hiervon kann es gegebenenfalls auch zweckmäßig sein, dass das erste Funkkommunikationsgerät UE1 dem PTT-Server PTTS1 ein Steuer- bzw. Benachrichtigungssignal über seinen Wechselwunsch zuschickt, und dieser dann ein Benachrichtigungssignal unter Zwischenvermittlung der CSCF-Komponente CSCF1 des "IP Multimedia Subsystems" IMS1 an die Vermittlungseinheit MSC1 weiterleitet, die dem leitungsorientierten Netzwerkteil des Funkkommunikationssystems angehört. In der Figur 1 ist dieses Benachrichtigungssignal, das vom PTT-Server PTTS1 an die Vermittlungseinheit MSC1 über eine Signalisierungsverbindung LSM11 übertragen wird, durch einen strichpunktierten Pfeil angedeutet, der mit SM1 bezeichnet ist. Die Signalisierungsverbindung LSM11 ist dort ebenfalls strichpunktiert gezeichnet. Allgemein ausgedrückt wird also von einer Steuereinheit, die für die aufgebaute PTT-Sitzung PC zuständig ist, ein Benachrichtigungssignal über den Wechselwunsch des ersten Funkkommunikationsgeräts an diejenige netzwerkseitige Steuereinheit übermittelt, die für die Aktivierung und den Aufbau der leitungsorientierten Telefonverbindung TC zuständig ist. Insbesondere ist dabei die Steuereinheit für die PTT-Sitzung durch einen PTT-Server gebildet. Als Steuereinheit für die leitungsorientierte Telefonverbindung wird insbesondere eine MSC-Vermittlungseinheit verwendet.

In den Steuer- bzw. Benachrichtigungssignalen IS1, IS2, IS2* SM1 kann zusätzlich neben den Telefonnummern PN1, PN2 ein I-dentifikations-Parameter P1, der die aktive PTT-Sitzung eindeutig identifiziert, mitgeliefert werden, damit die neu aufgebaute leitungsorientierte Telefonverbindung TC der bestehenden PTT-Sitzung PC eindeutig zugeordnet werden kann. Die Übergabeparameter PN1, PN2, P1 sind in der Figur 1 jeweils in Klammern hinter die Steuersignale IS1, IS2, IS2*, SM1 gesetzt. Erst durch den hinzugefügten Identifikationsparamter P1 kann eine eindeutige Verknüpfung, Ankopplung, bzw. Relation zwischen der schon bestehenden, spezifischen PTT-Sitzung PC und der gewünschten Telefonverbindung TC (und umgekehrt) bewirkt werden, wodurch dieses Paar von Kommunikationsverbindungen PC, TC von anderen eingehenden Anrufen und/oder anderen PTT-Sitzungen unterscheidbar ist. Insbesondere ist dieses gebildete Paar von zueinandergehörender PTT-Sitzung und Telefonverbindung gegenüber anderen, normalen Telefonanrufen und/oder PTT-Sitzungen extrahierbar, d.h identifizierbar. wichtig.

In der Figur 2 ist die zusätzlich aufgebaute, leitungsorientierte Telefonverbindung TC zwischen den beiden Funkkommunikationsgeräten UE1, UE2 eingezeichnet. Diese leitungsorientierte Telekommunikationsverbindung TC besteht nun parallel, das heißt gleichzeitig zur schon vorher aufgebauten bzw. bestehenden PTT-Sitzung PC, von der aus der Übergang zur normalen Telefonverbindung TC aus eingeleitet worden ist. Die Gruppe von Netzwerkkomponenten zur Auswahl und Bereitstellung der paketorientierten PTT-Sitzung PC ist dabei in der Figur 2 mit G1, sowie die Gruppe von Netzwerkkomponenten zur Auswahl und Bereitstellung der leitungsorientierten Telefonverbindung TC mit G2 bezeichnet. Die aufgebaute Telefonverbindung TC umfasst ausgehend vom ersten Funkkommunikationsgerät UE1 eine Signalisierungsverbindung SI1 sowie eine Datenverbindung D1 zur netzwerkseitig zugeordneten Vermittlungseinheit MSC1. Diese steht stellvertretend für die übrigen Komponenten des leitungsorientierten Teils CSNW1 des Funknetzwerks. Die Vermittlungseinheit MSC1 ist über eine Signalisierungsverbindung SI12 sowie eine Datenverbindung D12 mit der Vermittlungseinheit MSC2 verknüpft. Diese repräsentiert auch die übrigen Komponenten des leitungsorientierten Teils CSNW2 des Funknetzwerksiz, der dem zweiten Funkkommunikationsgerät UE2 zugeordnet ist. Die zweite Vermittlungseinheit MSC2 ist ebenfalls über eine entsprechende Signalisierungsverbindung SI2 und eine Datenverbindung D2 mit dem zweiten Funkkommunikationsgerät UE2 verbunden.

Im nächsten Schritt wird bereits nach der Aktivierung oder gegebenenfalls erst nach dem Aufbau der leitungsorientierten Telefonverbindung TC die PTT-Sitzung PC abgebaut. Dieser Zustand ist in der Figur 3 dargestellt. Dort haben die beiden Funkkommunikationsgeräte UE1, UE2 zu den Komponenten des paketorientierten Netzwerkteils sowie zu dem PTT-Server PTTS1 keine Kommunikationsverbindungen mehr.

Selbstverständlich kann der Wechsel von der paketorientierten PTT-Sitzung PC zu der leitungsorientierten Telefonverbindung TC auch durch das zweite Funkkommunikationsgerät UE2 in entsprechender Weise angestoßen und durchgeführt werden.

Um für den Wechsel von der Kommunikationsverbindungsart PTT-Service zur leitungsorientierten Telefonverbindung (und umgekehrt) jeweils ein Steuer- bzw. Benachrichtigungssignal generieren zu können, weist das jeweilige Funkkommunikationsgerät UE1 bzw. UE2 eine Steuereinheit ST1 bzw. ST2 auf. Vorzugsweise wird dem Benutzer des jeweiligen Funkkommunikationsgeräts eine zugehörige Auswahlprozedur in dessen Bedienungsmenü bereitgestellt, um die Steuereinheit seines Funkkommunikationsgeräts ansprechen zu können.

In Verallgemeinerung werden zum Wechsel von der paketorientierten PTT-Sitzung PC zur leitungsorientierten Telefonverbindung TC ein oder mehrere Adressparameter mindestens eines an der PTT-Sitzung beteiligten Funkkommunikationsgeräts und/oder mindestens ein PTT-Sitzungs-IdentifikationsParameter mittels mindestens eines Steuersignals an die Steuereinheit übermittelt, die für die leitungsorientierte Telefonverbindung zuständig ist. Solche Adressparameter sind insbesondere durch die Telefonnummern PN1, PN2 der jeweilig beteiligten Funkkommunikationsgeräts gebildet. Hier im Ausführungsbeispiel von Figur 1 werden vom PTT-Server PTTS1 als Steuereinheit für die PTT-Sitzung PC in dem Steuersignal SM1 über die Signalisierungsverbindung LSM11 beispielsweise die Telefonnummern PN1, PN2 der beiden Funkkommunikationsgeräte UE1, UE2 sowie der Identifikationsparameter P1 an die Steuereinheit MSC1 übertragen.

Ist umgekehrt bereits eine leitungsorientierte Telefonverbindung TC zwischen den beiden Funkkommunikationsgeräten UE1, UE2 aufgebaut, und wird nun von einem dieser Funkkommunikationsgeräte UE1, UE2 der Wechsel zu einer PTT-Sitzung PC gewünscht, so werden ebenfalls ein oder mehrere Adressparameter mindestens eines an der leitungsorientierten Telefonverbindung TC beteiligten Funkkommunikationsgeräts UE1, UE2 sowie ein Identifikationsparameter T1 als eindeutiger Kennzeichner für die leitungsorientierte Telefonverbindung mittels mindestens eines Steuersignals an den PTT-Server PTTS1 als Steuereinheit übermittelt, die für die paketorientierte PTT-Sitzung PC zuständig ist. Ein derartiges Steuersignal kann insbesondere durch diejenige Steuereinheit, die für die leitungsorientierte Telefonverbindung TC zuständig ist, generiert und an die Steuereinheit direkt übertragen werden, die für die paketorientierte PTT-Sitzung PC zuständig ist. In der Figur 3 ist zusätzlich strichpunktiert eingezeichnet, dass beispielsweise die Vermittlungseinheit MSC1, die dem ersten Funkkommunikationsgerät UE1 zugeordnet ist, ein Steuersignal MS1 ((IP1, IP2, T1) über eine Signalisierungsverbindung LMS1 über die CSCF-Komponente CSCF1 im "IP Multimedia Subsystem" IMS1 direkt an den PTT-Server PTTS1 sendet. Dieses Steuersignal MS1 enthält insbesondere die IP- oder die SIP-Adressen IP1, IP2 der an der leitungsorientierten Telefonverbindung TC beteiligten Funkkommunikationsgeräte UE1, UE2 sowie den Identifikationsparameter T1 für die bereits bestehende Telefonverbindung TC. Die Adressen IP1, IP2 der beiden Funkkommunikationsgeräte UE1, UE2 für den gewünschten, paketorientierten PTT-Dienst-Verbindungsaufbau sind der Vermittlungseinheit MSC1 entweder schon aus einer vorangegangenen PTT-Sitzung bekannt oder die Vermittlungseinheit MSC1 hat diese Adressen von den beiden Funkkommunikationsgeräten UE1, UE2 vorher abgefragt. Gegebenenfalls übermittelt das jeweilige Funkkommunikationsgerät, das den Wechsel zur PTT-Sitzung wünscht, von sich aus seine eigene paketorientierte Adresse (für die PTT-Sitzung) sowie die des gewünschten Gesprächspartners oder bildet diese aus den ihm bekannten Telefonnummern insbesondere in Form von URI (uniform resource identifier)- Adressen. Dabei kann die paketorientierte Adresse des Gesprächspartners auch durch ein Anforderungssignal desjenigen Funkkommunikationsgeräts abgefragt werden, das den Wechsel von der leitungsorientierten Telekommunikationsverbindung zur paketorientierten PTT-Sitzung aktiviert. Diese Abfrage kann ggf. durch die netzwerkseitig zugeordnete Vermittlungs- bzw. Steuereinheit durchgeführt werden, die demjenigen Funkkommunikationsgerät zugeordnet ist, das den Wechsel von der Telefonverbindung zur PTT-Sitzung wünscht.

Alternativ zur Kontrolle des Wechsels von der leitungsorientierten Telefonverbindung TC zur paketorientierten PTT-Sitzung PC durch diejenige Steuereinheit, die für die leitungsorientierte Telefonverbindung TC zuständig ist, kann nach einer bevorzugten Varainate dasjenige Funkkommunikationsgerät, das diesen Wechsel wünscht, auch direkt ein entsprechendes Steuersignal zum PTT-Server senden. In der Figur 3 sendet das erste Funkkommunikationsgerät UE1 ein derartiges direktes Steuersignal MS1*, das die Adressparameter IP1, IP2 sowie den Identifikationsparameter T1 enthält, über die Komponenten SGSN1, GGSN1, CSCF1 an den PTT-Server PTTS1. Die Generierung des Steuersignals MS1* mit den Adressparametern IP1, IP2 sowie dem Identifikationsparameter T1 wird dabei durch die Steuereinheit ST1 des Funkkommunikationsgeräts UE1 durchgeführt, das heißt, das Funkkommunikationsgerät UE1 kontrolliert vollständig den Wechsel von der bereits aufgebauten leitungsorientierten Telefonverbindung TC zur paketorientierten PTT-Sitzung PC. Ggf. kann die Steuereinheit ST1 auch den Adressparameter IP2 über die bereits bestehende Telefonverbindung TC vom zweiten Funkkommunikationsgerät UE2 oder dessen zuständiger Vermittlungseinheit MSC2 abfragen oder aus der ihm bekannten oder übermittelten Telefonnummer PN2 erzeugen.

Alternativ dazu kann nach dem Steuersignal MS1* anstelle des Funkkommunikationsgerät UE1 bevorzugt der PTT-Server den Wechsel von der bereits aufgebauten leitungsorientierten Telefonverbindung TC zur paketorientierten PTT-Sitzung PC vollständig kontrollieren. Dazu weist er eine Steuereinheit SVS auf (siehe Figur 1). Das erste Funkkommunikationsgerät UE1 signalisiert also direkt via dem Steuersignal MS1* dem PTT-Server PTTS1 seinen Wechselwunsch zu einem spezifischen PTT-Service. Daraufhin übernimmt der PTT-Server PTTS1 die Kontrolle über die weiteren Schritte zum Wechsel.

Zusammenfassend betrachtet wird von einer aufgebauten ersten Kommunikationsverbindung zu einer zweiten Kommunikationsverbindung unter Kontrolle mindestens eines an der ersten Kommunikationsverbindung beteiligten Funkkommunikationsgeräts und/oder mindestens einer an der ersten Kommunikationsverbindung beteiligten Steuereinheit des Funknetzwerks des Funkkommunikationssystems gewechselt, indem noch während des Bestehens der ersten Kommunikationsverbindung die Aktivierung der zweiten Kommunikationsverbindung vorgenommen wird.

Auf diese Weise ist ein weitgehend nahtloser Übergang
1. von einer PTT-Sitzung zu einer Telefonverbindung, und/oder
2. von einer Telefonverbindung zu einer PTT-Sitzung für den Benutzer des jeweilig beteiligten Funkkommunikationsgeräts ermöglicht. Dabei wird vom Prinzip her zwischen zwei Lösungsvarianten unterschieden:
   A - eine teilnehmergeräte-kontrollierte Lösung und
   B - eine netzwerk-kontrollierte Lösung

### 1. Übergang von einer PTT-Sitzung zu einer Telefonverbindung:

In einer ersten Ausgangssituation ist bereits eine PTT-Sitzung zwischen zwei Funkkommunikationsgeräten wie zum Beispiel UE1, UE2 von Figur 1 aufgebaut, das heißt es besteht sowohl eine Signalisierungs- als auch eine nutzbare Datenverarbeitung auf IP-Basis zwischen diesen beiden Funkkommunikationsgeräten. Die Nutzer der beiden Funkkommunikationsgeräte wünschen nun einen möglichst nahtlosen Wechsel von der PTT-Sitzung zu einer normalen Telefonverbindung in der PSTN-CS-Domain (Public Switched Telephone Network - Circuit Switched), das heißt im leitungsorientierten Teil des Funknetzwerks.

### 1.A Teilnehmergeräte-kontrollierte Lösung:

"Teilnehmergeräte(UE = User Equipment)-kontrollierte Lösung" bedeutet, dass dasjenige Funkkommunikationsgerät, das den Wechsel initiiert, auch die Kontrolle über den Wechsel hat und behält. Dies ist in den nachfolgenden Ausführungsbeispielen immer das erste Funkkommunikationsgerät UE1 (siehe Figur 1). Vom Grundprinzip her baut nun dieses erste Funkkommunikationsgerät UE1 unabhängig von der PTT-Sitzung eine Telefonverbindung über das PSTN-CS(Public Switched Telephone Network - Circuit Switched)-Netzwerk, das heißt über den leitungsorientierten Teil des Funknetzwerks, zu dem zweiten Funkkommunikationsgerät UE2 auf. Das zweite Funkkommunikationsgerät kann diesen Anruf entweder automatisch annehmen oder seinem Nutzer diesen Anruf auf eine von ihm wählbare Weise notifizieren. Beispielsweise kann der Wechselwunsch des Nutzers des ersten Funkkommunikationsgeräts dem Nutzer des zweiten Funkkommunikationsgeräts optisch oder akustisch angezeigt werden. Insbesondere wird dem Nutzer des zweiten Funkkommunikationsgeräts durch den übermittelten Identifikationsparameter P1 angezeigt, dass der Anruf zur schon laufenden PTT-Sitzung PC gehört und nicht ein weiterer Anruf ohne Bezug zur PTT-Sitzung PC ist. Nachdem die Telefonverbindung aufgebaut ist, gehen alle Sprachdaten anstelle über die IP-basierte PTT-Sitzung nun über die PSTN-CS-basierte Telefonverbindung. Die PTT-Sitzung kann dann sofort zum Beispiel vom ersten Funkkommunikationsgerät UE1 automatisch beendet werden oder erst nach einem gewissen Zeitraum wie zum Beispiel nach 5 Minuten. Sie kann jedoch alternativ dazu auch weiter so lange parallel aufrecht gehalten werden, bis die Kommunikation zwischen dem ersten und dem zweiten Funkkommunikationsgerät UE1, UE2 endgültig beendet wird. Durch das parallele Halten der PTT-Sitzung und gleichzeitig der Telefonverbindung zwischen den beiden Funkkommunikationsgeräten UE1, UE2 kann jederzeit ein erneuter Wechsel von der Telefonverbindung zu der PTT-Sitzung schnell durchgeführt werden, d.h. es kann flexibel hin- und hergeschaltet werden, ohne dass ein kompletter Neuaufbau der jeweilig gewünschten Kommunikationsverbindung erforderlich ist.

### 1.B Netzwerk-kontrollierte Lösung:

"Netzwerk-kontrollierte Lösung" bedeutet, dass der PTT-Server wie zum Beispiel PTTS1 in Figur 1, über den die PTT-Sitzung läuft, die Kontrolle über den Wechsel hat und nicht wie in der Ausführungsvariante 1.A ein beteiligtes Funkkommunikationsgerät. Für diese netzwerk-kontrollierte Lösung signalisiert dasjenige Funkkommunikationsgerät wie zum Beispiel UE1, das einen Wechsel von der PTT-Sitzung zur Telefonverbindung wünscht, diesen Wechselwunsch durch ein Benachrichtigungssignal wie zum Beispiel IS2 (siehe Figur 1) und IS2* an den PTT-Server wie zum Beispiel PTTS1 in Figur 1. Der PTT-Server signalisiert dann der für das erste Funkkommunikationsgerät UE1 zuständigen Vermittlungseinheit MSC1 in der PSTN-CS-Domain mittels eines Steuersignals wie z.B. SM1, dass eine Telefonverbindung zwischen dem ersten und dem zweiten Funkkommunikationsgerät UE1, UE2 aufgebaut werden soll. Die Vermittlungseinheit MSC1 startet daraufhin entsprechende Aktivitäten zum Aufbau der Telefonverbindung. Dabei können die Funkkommunikationsgeräte UE1, UE2 den jeweilig an sie gehenden Anruf insbesondere automatisch annehmen. Alternativ dazu kann der jeweilige Anruf auch erst nach aktiver Bestätigung durch den Benutzer des jeweiligen Funkkommunikationsgeräts angenommen werden. Sobald die Telefonverbindung steht, gehen alle Sprachdaten anstelle über die IP-basierte PTT-Sitzung nun über die PSTN-CS-basierte Telefonverbindung. Ggf. signalisiert die Vermittlungseinheit, die für die Telefonverbindung zuständig ist, wie hier zum Beispiel MSC1, dem PTT-Server, dass die Telefonverbindung erfolgreich aufgebaut worden ist. Wie im Beispiel 1.A kann dann gegebenenfalls die PTT-Sitzung seitens des PTT-Servers PTTS1 sofort beendet werden.

### 2. Übergang von einer Telefonverbindung zu einer PTT-Sitzung:

In einer zweiten Ausgangssituation ist nun eine normale Telefonverbindung in der PSTN-CS-Domain zwischen den beiden Funkkommunikationsgeräten UE1, UE2 aufgebaut. Die beiden Nutzer der Funkkommunikationsgeräte UE1, UE2 möchten von dieser Telefonverbindung möglichst nahtlos zu einer IP-basierten PTT-Sitzung wechseln.

### 2.A Teilnehmergeräte-kontrollierte Lösung:

Hierbei hat wieder eines der an der Telefonverbindung beteiligten Funkkommunikationsgeräte die Kontrolle über den Wechsel. Dies ist im vorliegenden Ausführungsbeispiel das erste Funkkommunikationsgerät UE1. Parallel zu der bestehenden Telefonverbindung TC baut dieses Funkkommunikationsgerät UE1, das den Wechsel initiiert, eine PTT-Sitzung PC auf. Sobald die PTT-Sitzung aktiv ist, werden alle Sprachdaten anstelle über die Telefonverbindung über die PTT-Sitzung übermittelt. Die Telefonverbindung wird danach vom ersten Funkkommunikationsgerät UE1 beendet oder parallel dazu für eine gewünschte Zeitdauer aufrechtgehalten.

### 2.B Netzwerk-kontrollierte Lösung:

Hierbei hat diejenige Steuereinheit des Funknetzwerks, die für die Telefonverbindung zuständig ist, die Kontrolle über den Wechsel zur PTT-Sitzung. Diese netzwerkseitige Steuereinheit ist vorzugsweise durch diejenige Vermittlungseinheit wie zum Beispiel MSC1 (siehe Figur 1) gebildet, die dem Funkkommunikationsgerät wie zum Beispiel UE1 zugeordnet ist, das den Wechselwunsch hat. Das Funkkommunikationsgerät UE1 signalisiert ihrer netzwerkseitig zugeordneten Vermittlungseinheit MSC1 mit Hilfe eines Benachrichtigungssignals IS5, das in der Figur 3 zusätzlich strichpunktiert eingezeichnet ist, dass ein Wechsel zur PTT-Sitzung PC gewünscht ist. Die Vermittlungseinheit MSC1 signalisiert dann dem zuständigen PTT-Server zum Beispiel mit Hilfe des Steuersignals MS1, dass dieser eine PTT-Sitzung zwischen den beiden Funkkommunikationsgeräten UE1, UE2 aufbauen soll. Der PTT-Server PTTS1 startet daraufhin entsprechende Aktivitäten. Insbesondere sendet er an die beiden Funkkommunikationsgeräte UE1, UE2 entsprechende Anfragesignale, auf die die Funkkommunikationsgeräte UE1, UE2 die PTT-Sitzung insbesondere automatisch annehmen können. Diese Anfragesignale des PTT-Servers sind in der Figur 3 der zeichnerischen Übersichtlichkeit halber weggelassen worden. Insbesondere kann der Nutzer des jeweilig empfangenden Funkkommunikationsgeräts auch das jeweilig eingehende Anfragesignal zum Aufbau einer PTT-Sitzung aktiv dadurch bestätigen, dass er ein entsprechendes Antwortsignal an den PTT-Server zurücksendet. Sobald die PTT-Sitzung steht, gehen alle Sprachdaten anstelle über die Telefonverbindung nun über die PTT-Sitzung. Vorzugsweise signalisiert der PTT-Server der Vermittlungseinheit MSC1, dass die PTT-Sitzung erfolgreich aufgebaut worden ist. Die Telefonverbindung kann dann ggf. sofort durch die Vermittlungseinheit MSC1 beendet werden, oder parallel aufrecht gehalten werden, wenn ein späteres, schnelles Zurückwechseln zur Telefonverbindung seitens der Benutzer noch nicht endgültig ausgeschlossen wird.

Die netzwerkseitige Steuereinheit, die die Kontrolle über den Wechsel zur PTT-Sitzung hat, ist alternativ durch den dem Funkkommunikationsgerät UE1 zugeordneten PTT-Server PTTS1 gebildet. Das Funkkommunikationsgerät UE1 signalisiert seinem netzwerkseitig zugeordneten PTT-Server PTTS1 mit Hilfe des Steuer- bzw. Benachrichtigungssignals MS1*, das in der Figur 3 zusätzlich strichpunktiert eingezeichnet ist, dass ein Wechsel von der bestehenden leitungsorientierten Telefonverbindung TC zur PTT-Sitzung PC gewünscht ist. Daraufhin startet der PTT-Server PTTS1 entsprechende Aktivitäten, deren weiterer Verlauf schon vorher, insbesondere im vorherigen Absatz erläutert wurde.

Dadurch, dass noch während einer bereits aufgebauten, ersten Kommunikationsverbindung zwischen mindestens zwei teilnehmenden Funkkommunikationsgeräten die Aktivierung einer zweiten Kommunikationsverbindung vorgenommen wird, können die Nutzer der Dienste "PTT" und "Telefonie" ohne große Umstände und auch ohne Bruch in der Kommunikation untereinander jeweils zwischen diesen beiden Diensten wechseln. So kann je nach momentanem Kommunikationsbedarf und aktueller Kommunikationssituation derjenige Dienst genutzt werden, der gerade als angenehmer bzw. vorteilhafter seitens der Benutzer betrachtet wird. Ein Vorteil der teilnehmergeräte-kontrollierten Lösung ist insbesondere, dass zur Realisierung keine aufwändigen oder zusätzlichen Funktionalitäten im Funknetzwerk erforderlich sind. Ein Vorteil bei der netzwerk-kontrollierten Realisierung ist insbesondere, dass die Netzwerkelemente, die über die Logik eines Dienstes verfügen und auch den Ressourcen- und Kostenaufwand kontrollieren, das heißt hier z.B. die Vermittlungseinheiten MSC1, MSC2 sowie der PTT-Server PTTS1, auch die technische Kontrolle über einen Servicewechsel haben. Bei dieser Variante ist es dann sogar auch möglich, dass ein Servicewechsel vom Netzwerk initiiert werden kann. Dann ist es nicht erforderlich, dass die beteiligten Funkkommunikationsgeräte mit aufwändigen Steuermitteln zusätzlich versehen werden. Vielmehr ist es ermöglicht, bereits existierende Funkkommunikationsgeräte zu verwenden.

Damit ein Wechsel von der ersten Kommunikationsverbindungsart zu der zweiten Kommunikationsverbindungsart einwandfrei, das heißt weitgehend lückenlos durchgeführt werden kann, wird bei der teilnehmergeräte-kontrollierten Lösung vorzugsweise im jeweilig teilnehmenden Funkkommunikationsgerät die Nutzeridentität wie zum Beispiel Telefonnummer und/oder SIP-Adresse von der einen Applikation wie z.B. PTT in die jeweilig andere wie z.B. Telefonie übergeben. Weiterhin ist es zweckmäßig, die Signalisierung über die Mitteilung des Wechselwunsches beim zusätzlichen Aufbau der Telefonverbindung beziehungsweise der PTT-Sitzung dahingehend zu erweitern, dass das jeweilige Funkkommunikationsgerät auf der Gegenseite den Anruf beziehungsweise die PTT-Sitzung automatisch akzeptieren soll. Dann wird die zusätzliche Kommunikationsverbindung parallel zur bestehenden Kommunikationsverbindung ohne zusätzlichen Eingriff des Benutzers auf der Gegenseite durchgeführt. Damit beim Aufbau der zweiten Kommunikationsverbindungsart der Zusammenhang zu der ersten Kommunikationsverbindungsart hergestellt werden kann und eindeutig ist, wird bei den Signalisierungen in vorteilhafter Weise zusätzlich ein Identifikations-Parameter wie z.B. T1, der die schon bestehende erste Kommunikationsverbindung eindeutig identifiziert, im Steuersignal des jeweiligen Funkkommunikationsgerät mit Wechselwunsch oder im Steuersignal der Steuereinheit mitgeliefert, die für die bereits bestehende Kommunikationsverbindung netzwerkseitig zuständig ist.

Bei der netzwerk-kontrollierten Lösung sendet das den Wechsel auslösende Funkkommunikationsgerät wie zum Beispiel UE1 ein entsprechendes Benachrichtigungssignal an die für ihn netzwerkseitig zuständige Vermittlungseinheit wie zum Beispiel MSC1, wenn ein Wechsel von der PTT-Sitzung zur Telefonverbindung gewünscht ist, sowie zum PTT-Server wie zum Beispiel PTTS1, wenn ein Wechsel von der Telefonverbindung zur PTT-Sitzung gefordert ist. Auf ein derartiges Aufforderungssignal hin übermittelt die zuständige Vermittlungseinheit wie zum Beispiel MSC1 beim Wechselwunsch von der paketorientierten PTT-Sitzung zur leitungsorientierten Telefonverbindung ein Steuersignal wie zum Beispiel MS1 an diejenige Steuereinheit wie hier den PTT-Server PTTS1, die für die leitungsorientierte Telefonverbindung zuständig ist. Beim Wechsel von der paketorientierten PTT-Sitzung zur leitungsorientierten Telefonverbindung übermittelt der PTT-Server wie zum Beispiel PTTS1 mindestens ein Steuersignal wie zum Beispiel SM1 an diejenige Steuereinheit im Funknetzwerk, die für die leitungsorientierte Telefonverbindung zuständig ist. Diese Steuereinheit wird hierbei insbesondere durch diejenige Vermittlungseinheit wie zum Beispiel MSC1 gebildet, die für dasjenige Funkkommunikationsgerät zuständig ist, das den Wechsel von der paketorientierten PTT-Sitzung zur leitungsorientierten Telefonverbindung auslöst. Um die erfolgreiche Durchführung des Aufbaus eines Anrufs beziehungsweise einer PTT-Sitzung zu bestätigen, kann es gegebenenfalls zweckmäßig sein, das jeweilig abgeschickte Benachrichtigungssignal bzw. Steuersignal in Gegenrichtung durch ein Antwortsignal zu quittieren.

### Beispiel 1 zur teilnehmergeräte-kontrollierten Lösung von 1.A:

Es wird von einer PTT-Sitzung zwischen den beiden Funkkommunikationsgeräten UE1, UE2 ausgegangen, deren Verbindungsaufbau über den PTT-Server PTTS1 in der Figur 1 mit PC bezeichnet ist. Weil die Kommunikation zwischen den Nutzern der beiden Funkkommunikationsgeräte UE1, UE2 zu einer Diskussion übergeht, möchten sie von der PTT-Sitzung PC zu einer normalen Telefonverbindung TC entsprechend der Figur 2 wechseln. Dazu wird im PTT-Menü des jeweiligen Funkkommunikationsgeräts die Funktion "Wechsel zur Telefonie" angeboten, die hier im Ausführungsbeispiel der Nutzer des ersten Funkkommunikationsgeräts UE1 auswählt. Daraufhin ruft innerhalb des ersten Funkkommunikationsgeräts UE1 dessen PTT-Applikation (z.B. ein PTT-Client) die Telefonie-Applikation z.B. mit der Telefonnummer des PTT-Partners, d.h. hier mit der Telefonnummer des zweiten Funkkommunikationsgeräts UE2, als Übergabeparameter auf. Das erste Funkkommunikationsgerät UE1 startet daraufhin eine Rufanfrage IS1 an den leitungsorientierten Teil des Funknetzwerks, der für den Aufbau von Telefonverbindungen zuständig ist. Dieser wird mit PSTN-CS-Domain bezeichnet. Die Rufanfrage IS1 kommt dann beim zweiten Funkkommunikationsgerät an und wird dessen Nutzer entsprechend signalisiert. So kann der Nutzer des zweiten Funkkommunikationsgeräts beispielsweise durch einen Anrufton darauf aufmerksam gemacht werden, dass der Wechsel vom PTT-Dienst zur normalen Telefonverbindung seitens des ersten Funkkommunikationsgeräts gewünscht ist. Wenn der Nutzer des zweiten Funkkommunikationsgeräts UE2 den Anruf IS1 akzeptiert, indem er z.B. ein Quittierungs- bzw. Antwortsignal RIS1 an das erste Funkkommunikationsgerät über die Vermittlungseinheiten MSC1, MSC2 zurückschickt, dann gibt im ersten Funkkommunikationsgerät UE1 die Telefonie-Applikation der PTT-Applikation die Antwort, dass eine Telefonverbindung erfolgreich aufgebaut worden ist. Dieser Zustand ist in der Figur 2 dargestellt. Dort ist die Telefonverbindung mit TC bezeichnet. Sie wird parallel bzw. zusätzlich zur PTT-Sitzung zwischen den beiden Funkkommunikationsgeräten UE1, UE2 gehalten. Nachdem diese Telefonverbindung TC zwischen den beiden Funkkommunikationsgeräten UE1, UE2 zur Verfügung gestellt worden ist, werden alle Sprachdaten über diese Telefonverbindung TC in der PSTN-CS-Domain in beiden Übertragungsrichtungen übermittelt, und zwar unabhängig davon, ob ein Nutzer gerade die PTT-Taste an seinem Funkkommunikationsgerät aktiviert hat oder nicht. Mit anderen Worten ausgedrückt heißt das, dass die Sprachverbindung über den PTT-Server PTTS1 von Figur 2 dann nicht mehr besteht, sondern nur noch die Kommunikationsverbindung über die netzwerkseitig zuständigen Vermittlungseinheiten MSC1, MSC2. Die PTT-Applikation im ersten Funkkommunikationsgerät UE1, von dem der Wechselwunsch ausging, kann daraufhin sofort oder nach einem bestimmten, einstellbaren Zeitraum die PTT-Sitzung PC beenden. Dazu sendet es die SIP-Nachricht "BYE" an den zuständigen PTT-Server. Dieser Zustand ist in der Figur 3 dargestellt, wo nur noch die Telefonverbindung TC zwischen den beiden Funkkommunikationsgeräten UE1, UE2 gehalten wird. Alternativ dazu kann es gegebenenfalls zweckmäßig sein, die PTT-Sitzung PC auch weiterhin parallel zur Telefonverbindung TC aufrecht zu halten, um einen möglicherweise später gewünschten Wechsel zurück zu der PTT-Sitzung PC schneller realisieren zu können. Dies ist beispielsweise vorteilhaft, wenn die Diskussion zwischen den Nutzern der beiden Funkkommunikationsgeräte UE1, UE2 beendet ist und erneut nur sporadisch, d.h. singulär Sprachnachrichten übermittelt werden.

Um einen Servicewechsel möglichst ohne Bruch in der Kommunikation zwischen den beiden Funkkommunikationsgeräten UE1, UE2 zu erreichen, kann es insbesondere vorteilhaft sein, dass das zweite Funkkommunikationsgerät UE2 die Rufanfrage IS1 des ersten Funkkommunikationsgeräts UE1 automatisch annimmt. Der Nutzer des zweiten Funkkommunikationsgeräts UE2 wird also nicht mit einem Rufton über den Anruf IS1 informiert und braucht auch nicht diesen Anruf IS1 annehmen. Dazu ist es zweckmäßig, dass bei der Rufanfrage des ersten Funkkommunikationsgeräts UE1 ein Kennzeichnungsparameter, insbesondere ein sogenanntes FLAG, "Ruf automatisch annehmen" oder "Ruf übernimmt aktive PTT-Sitzung" in das Benachrichtigungssignal IS1 eingefügt wird, so dass das zweite Funkkommunikationsgerät UE2 aufgrund eines solchen Kennzeichnungsparameters den Ruf automatisch annimmt. Alternativ oder auch zusätzlich dazu kann das zweite Funkkommunikationsgerät UE2 bei der Rufanfrage durch das Benachrichtigungssignal IS1 prüfen, ob mit dem gleichen Teilnehmer, d.h. mit dessen assoziierter Telefonnummer schon eine PTT-Sitzung aktiv ist. Nur wenn dies der Fall ist, wird der Anruf automatisch angenommen. Alternativ oder auch zusätzlich dazu kann in der Rufanfrage in besonders vorteilhafter Weise zusätzlich ein Identifikations-Parameter wie z.B. P1, der die aktive PTT-Sitzung eindeutig identifiziert, mitgeliefert werden, damit die neu aufgebaute leitungsorientierte Telefonverbindung der bestehenden PTT-Sitzung eindeutig zugeordnet werden kann.

### Beispiel 2 zur teilnehmergeräte-kontrollierten Lösung 1.A:

Alternativ zum Telefonrufaufbau zu Beginn von Beispiel 1 ist es auch möglich, dass nach Aktivierung der Funktion "Wechsel zur Telefonie" im ersten Funkkommunikationsgerät UE1 eine sogenannte SIP (Session Initiation Protocol)-Nachricht an den PTT-Server PTTS1 gesendet wird, der daraufhin eine entsprechende SIP-Nachricht PTTS1 zum zweiten Funkkommunikationsgerät UE2 übermittelt. Dieses Benachrichtigungssignal ist in der Figur 1 zusätzlich strichpunktiert eingezeichnet und mit IS2 bezeichnet. In dieser SIP-Nachricht ist eine Anfrage beinhaltet, zu einer Telefonverbindung im PSTN-CS-Domain zu wechseln. SIP-Nachrichten, die hierfür genutzt werden können, sind beispielsweise "re-invite" oder "info", indem dort ein neuer Header, d.h. ein neues Kopffeld wie z.B. "applicationchange: CS-Telefonie" eingeführt wird und/oder indem eine entsprechende SDP (Session Description Protocol)-Message bzw. Nachricht im Datenteil bzw. Body der SIP-Nachricht eingefügt wird. Gegebenenfalls kann es zweckmäßig sein, dass vom ersten Funkkommunikationsgerät UE1 dessen Telefonnummer PN1 in die SIP-Nachricht IS2 mit eingetragen wird. Als positive Antwort auf dieses Benachrichtigungssignal IS2 kann das zweite Funkkommunikationsgerät eine SIP-Nachricht RIS2 an das erste Funkkommunikationsgerät UE1 zurücksenden. Dabei kann es zweckmäßig sein, dass vom zweiten Funkkommunikationsgerät UE2 dessen Telefonnummer PN2 in das Antwortsignal bzw. Quittierungssignal RIS2 mit eingefügt wird. Somit gibt es zwei Alternativen zum Aufbau einer Telefonverbindung zwischen den beiden Funkkommunikationsgeräten UE1, UE2. Diese sind in den Figuren 4 und 5 schematisch dargestellt.

In der ersten Variante von Figur 4 sendet das Funkkommunikationsgerät UE1 das Benachrichtigungssignal IS2 unter Zwischenvermittlung über den PTT-Server PTTS1 an das zweite Funkkommunikationsgerät UE2. Dieses akzeptiert die Rufanfrage und sendet das Bestätigungssignal RIS2 unter Angabe seiner Telefonnummer PN2 an das erste Funkkommunikationsgerät UE1 über den PTT-Server PTTS1 zurück. Nach Erhalt des Bestätigungssignals RIS2 mit dem Namen "200 OKAY (PN2)" startet das erste Funkkommunikationsgerät UE1 daraufhin den Rufaufbau mit einer Prozedur STC, da es nun die Telefonnummer PN2 des Gesprächspartners kennt. Dabei übermittelt UE1 die Telefonnummer PN2 des zweiten Funkkommunikationsgeräts UE2 an die netzwerkseitig zuständige Vermittlüngseinheit MSC1 als Adressparameter.

In der Variante nach Figur 5 liefert das erste Funkkommunikationsgerät UE1, dessen Benutzer den Wechselwunsch zur Telefonverbindung TC hat, im Benachrichtigungssignal IS2 seine Telefonnummer PN1 an das zweite Funkkommunikationsgerät UE2 mit. Dabei wird das Benachrichtigungssignal IS2 ebenfalls über die bestehenden Signalisierungs- und/oder Datenverbindungen der bereits aufgebauten PTT-Sitzung übermittelt. Dies ist in der Figur 5 dadurch angedeutet, dass dort der PTT-Server PTTS1 zwischen den Schnittstellen der beiden Funkkommunikationsgeräte UE1, UE2 durch ein gestricheltes Rechteck mit zugehöriger Schnittstellenlinie gezeichnet ist. Auf das Benachrichtigungssignal IS2 hin sendet das zweite Funkkommunikationsgerät UE2 an das erste Funkkommunikationsgerät UE1 unter Zwischenvermittlung des PTT-Servers PTTS1 das Antwortsignal RIS2 ohne Angabe seiner Telefonnummer zurück. Anschließend startet das zweite Funkkommunikationsgerät den Rufaufbau durch Aktivieren der Prozedur STC. Im Unterschied zur Variante von Figur 4 baut also hier das zweite Funkkommunikationsgerät UE2 anstelle des ersten Funkkommunikationsgeräts UE1 den Anruf auf. Dazu überträgt es an seine netzwerkseitig zuständige Vermittlungseinheit MSC2 die im Benachrichtigungssignal IS2 übertragene Rufnummer PN1 des ersten Funkkommunikationsgeräts UE1.

Die in der jeweiligen SIP-Nachricht wie z.B. RIS2 von Figur 4 sowie IS2 von Figur 5 mitgelieferte Telefonnummer PN2 bzw. PN1 kann gegebenenfalls für den jeweiligen Empfänger der SIP-Nachricht zum Rufaufbau erforderlich sein. Denn da die Signalisierung von PTT-Sessions SIP-basiert ist, kann es der Fall sein, dass das Funkkommunikationsgerät, das den Wechselwunsch zur Telefonverbindung hat, die Telefonnummer der übrigen beteiligten Funkkommunikationsgeräte gar nicht kennt. Für eine PTT-Sitzung kann nämlich bereits eine Nutzeradressierung allein durch SIP-Adressen und nicht durch Telefonnummern ausreichend sein.

In diesem Beispiel 2 kann die automatische Rufannahme des Angerufenen vorteilhaft durchgeführt werden, da der angerufenen Teilnehmerseite aufgrund der vorausgehenden SIP-Signalisierung bekannt ist, dass die Rufanfrage zum gewünschten Wechsel von der PTT-Sitzung zur Telefonverbindung gehört. Hierfür kann ggf. in der Rufanfrage zusätzlich ein Identifikations-Parameter wie z.B. P1 mitgeliefert werden.

### Beispiel 3 zur netzwerkkontrollierten Lösung von 1.B:

Auch hier aktiviert der Nutzer des ersten Funkkommunikationsgeräts UE1 die Funktion "Wechsel zur Telefonie" in seinem PTT-Menü. Daraufhin signalisiert das erste Funkkommunikationsgerät UE1 dem PTT-Server PTTS1, dass ein Servicewechsel von PTT zur Telefonie erwünscht ist. Dazu sendet es das Benachrichtigungssignal IS2* (siehe Figur 1) unter Angabe seiner eigenen Telefonnummer PN1 sowie der Telefonnummer PN2 des beteiligten zweiten Funkkommunikationsgeräts UE2 an den PTT-Server PTTS1. Für dieses Benachrichtigungssignal IS2* wird vorzugsweise das SIP-Format verwendet. Im Schnittstellendiagramm von Figur 6 trägt diese Nachricht die Bezeichnung "1: INFO (PN1, PN2)". Um dem zweiten Funkkommunikationsgerät UE2 den Wechselwunsch von PTT zur Telefonie indizieren zu können, kann es zweckmäßig sein, in das Benachrichtigungssignal IS2 einen entsprechenden Header wie z.B. mit dem Namen "Application-change: CS-Telefonie" einzuführen und/oder eine entsprechende SDP (Session Description Protocol)-Message im Body der SIP-Nachricht mitzuliefern. Nachdem das erste Funkkommunikationsgerät UE1 ein Bestätigungssignal RIS2* vom PTT-Server PTTS1 auf das Anfragesignal IS2* zurückerhalten hat, signalisiert der PTT-Server PTTS1 im Packet Switched Domain, d.h. im paketorientierten Teil des Funknetzwerks, der Vermittlungseinheit MSC1, die im PSCN/CS-Domain des Funknetzwerks für das erste Funkkommunikationsgerät UE1 zuständig ist, dass ein Wechselwunsch zu einer Telefonieverbindung zwischen den beiden Funkkommunikationsgeräten UE1, UE2 seitens des ersten Funkkommunikationsgeräts UE1 besteht. Dazu sendet er ein Benachrichtigungssignal R2 an die CSCF-Komponente CSCF1 (siehe Figur 1), die ein Benachrichtigungssignal R3 unter Zwischenvermittlung einer BGCF (Breakout Gateway Control Function)-Komponente BGCF1 an die MGCF-Komponente MGCF1 verschickt. Diese wiederum übermittelt ein Benachrichtigungssignal R4 an die SGW-Komponente SGW1, die schließlich ein Benachrichtigungsssignal SU5 mit dem Namen "5: set up (PM1, PM2)" an die Vermittlungseinheit MSC1 schickt. Die einzelnen Benachrichtigungssignale R2, R3, R4 sowie SU5 fungieren dabei insgesamt betrachtet als Steuersignal. Dieses ist in der Figur 6 zusätzlich strichpunktiert eingezeichnet und mit SM1 bezeichnet. Es beinhaltet die Telefonnummern PN1, PN2 als Adressparameter. Diese Übermittlung von ein oder mehreren Adressparametern mindestens eines an der PTT-Sitzung beteiligten Funkkommunikationsgeräts mittels mindestens eines Steuersignals an die Steuereinheit, die für die leitungsorientierte Telefonverbindung zuständig ist, ist in der Figur 7 im Detail dargestellt. Nach Erhalt des Benachrichtigungssignals IS2* über den Wechselwunsch seitens des Funkkommunikationsgeräts UE1 sendet der PTT-Server PTTS1 das Steuersignal SM1 unter Mitteilung der Telefonnummern PN1, PN2 der beiden Funkkommunikationsgeräte UE1, UE2 über die CSCF (Call State Control Function)-Komponente CSCF1, die MGCF (Media Gateway Control Function) -Komponente MGCF1 sowie die SGW (Signalling Gateway)-Komponente SGW1 an die Vermittlungseinheit MSC1 als Steuereinheit für die leitungsorientierte Telefonverbindung. Mit Hilfe der Nachrichtensignalkette R6, R7, R8 über die einzelnen Komponenten SGW1, MGCF1, CSCF1 hinweg wird dem PTT-Server PTTS1 bestätigt, dass die Anfrage zum Rufaufbau bei der Vermittlungseinheit MSC1 angekommen ist. Die BGCF-Komponente BGCF1 hat die Funktion, für die CSCF-Komponente CSCF1 die zuständige MGCF-Komponente MGCF1 herauszubekommen, deren Funktionalität hier im Rahmen der Erfindung nicht weiter betrachtet wird. Die MGCF-Komponente MGCF1 ist insbesondere für das Interworking, d.h. das Zusammenarbeiten zwischen der PS-Domain mit der PSTN/CS-Domain verantwortlich. Die SGW-Komponente SGW1 hat insbesondere die Funktion, dass SCFP/IP (Simple Control Frameport Protocol/Internet Protocol) basierte Signalisierungsnetzwerk im PS-Domain und das SS7 Signalisierungsnetzwerk im PSTN/CS-Domain zu verbinden. Nähere Einzelheiten hierzu finden sich in der Spezifikation 3GPP TS 23.228 V5.11.0 "IP Multimedia Subsystem (IMS); Stage 2".

Die Vermittlungseinheit MSC1 kann nun mit ihrer Funktion "netzwerk-initiierter Ruf" eine Telefonverbindung zwischen den beiden Funkkommunikationsgeräten UE1, UE2 aufbauen. Diese Prozedur ist insbesondere im Teil 5.2.3 der Spezifikation 3GPP TS 24.008 V5.10.0 "Mobile radio interface Layer 3 specification; Core network protocols; Stage 3" detailliert angegeben.

Die Aktivierung des Rufaufbaus seitens der Vermittlungseinheit MSC1 ist in der Figur 6 mit STC bezeichnet. Die Vermittlungseinheit MSC1 startet mit dieser Aktivierungsprozedur STC eine Rufanfrage beim zweiten Funkkommunikationsgerät UE2 unter Zwischenvermittlung dessen zuständiger Vermittlungseinheit MSC2. Diese Signalisierung zur empfangsseitigen Vermittlungseinheit MSC2 ist in der Figur 6 der Übersichtlichkeit halber weggelassen worden. Das zweite Funkkommunikationsgerät kann den Anruf automatisch annehmen oder eine explizite Bestätigung durch den Nutzer des zweiten Funkkommunikationsgeräts verlangen. Sobald die Telefonverbindung steht, werden alle Sprachdaten über die Telefonverbindung in der PSTN/CS-Domain in beiden Richtungen unabhängig davon übermittelt, ob ein Nutzer der beteiligten Funkkommunikationsgeräte UE1, UE2 gerade die PTT-Taste aktiviert hat oder nicht. Zudem signalisiert die Vermittlungseinheit MSC1 an den PTT-Server PTTS1 mithilfe von Quittierungssignalen ES9, N10, N11, N12 unter Beteiligung der Komponenten SGW1, MGCF1, CSCF1, dass die Telefonverbindung erfolgreich aufgebaut worden ist. Dies bestätigt der PTT-Server PTTS1 durch Zurücksenden der Quittierungssignalkette R13, R14, R15 an die SGW-Komponente SGW1. Der PTT-Server PTTS1 informiert schließlich mithilfe eines Antwortsignals IF16 das erste Funkkommunikationsgerät UE1, dass die Anfrage zum Wechsel von PTT zur Telefonie erfolgreich ausgeführt worden ist. Auf dieses Eenachrichtigungssignal IF16 antwortet das Funkkommunikationsgerät UE1 mit dem Antwortsignal RIF16 an den PTT-Server PTTS1. Der PTT-Server kann daraufhin sofort oder nach einem bestimmten einstellbaren Zeitraum die PTT-Sitzung beenden, indem er die SIP-Nachricht mit dem Namen "BYE" an die Funkkommunikationsgeräte UE1, UE2 sendet. Um einen etwaig späteren Wechsel zurück zu der PTT-Sitzung schneller realisieren zu können, kann die PTT-Sitzung aber gegebenenfalls auch weiter parallel zu der Telefonverbindung aufrechterhalten bleiben.

### Beispiel 4 zur teilnehmergeräte-kontrollierten Lösung 2.A:

Der Signalfluss dieses Beispiels ist ähnlich dem zu Beispiel 1, nur dass jetzt der Wechsel in die umgekehrte Richtung geht, nämlich von einer Telefonverbindung zu einer PTT-Session. Ausgangspunkt ist hier nun eine Telefonverbindung zwischen den beiden Funkkommunikationsgeräten UE1, UE2, wie sie in der Figur 3 dargestellt ist. Da die Kommunikation zwischen den Nutzern der beiden Funkkommunikationsgeräte nur noch sporadisch erfolgt, möchten sie von der Telefonverbindung TC zu der PTT-Sitzung PC wechseln. Dazu wird im Telefon-Menü des jeweiligen Funkkommunikationsgeräts die Funktion "Wechsel zu PTT-Session" angeboten. Hier im Ausführungsbeispiel wählt der Nutzer des ersten Funkkommunikationsgeräts UE1 diesen Menüpunkt aus. Daraufhin ruft innerhalb des ersten Funkkommunikationsgeräts UE1 die Telefonieapplikation die PTT-Applikation, z.B. einen PTT-Client insbesondere mit der Telefonnummer PN2 des Telefoniepartners, also hier der Telefonnummer des zweiten Funkkommunikationsgeräts UE2, als Übergabeparameter auf. Dieser startet daraufhin eine PTT-Anfrage im Packet Switched Domain über das "IP Multimedia Subsystem" (IMS) z.B. mit einer Invite-Nachricht in bekannter Art und Weise. Dazu wird mit Hilfe der Steuermittel ST2 des zweiten Funkkommunikationsgeräts UE2 ein Benachrichtigungssignal IS6 an die entsprechenden Komponenten im paketorientierten Netzwerkteil versendet. Dieses Benachrichtigungssignal IS6 ist in der Figure 3 strichpunktiert angedeutet. Wenn die PTT-Session etabliert ist, gibt die PTT-Applikation der Telefonie-Applikation die Antwort, dass diese PTT-Session erfolgreich aufgebaut worden ist. Der Aufbau und der Ablauf der PTT-Session wird dabei insbesondere durch den PTT-Server PTTS1 kontrolliert. Nach erfolgreichem Aufbau der PTT-Session wird die Telefonverbindung anschließend vom ersten Funkkommunikationsgerät UE1 beendet bzw. getrennt, das den Wechselwunsch ursprünglich hatte. Ab nun an werden Sprachdaten nur noch über die PTT-Sitzung in der PS-Domain übermittelt, wenn ein Nutzer gerade die PTT-Taste aktiviert hat, d.h. nur noch die PTT-Session ist aktiv.

### Beispiel 5 zur teilnehmergeräte-kontrollierten Lösung 2.A:

In Abwandlung zu Beispiel 4 wird hier die PTT-Sitzung parallel zur neu aufgebauten Telefonverbindung , d.h. gleichzeitig gehalten. Dann kann zwischen beiden Diensten nahezu übergangslos, d.h. unterbrechungslos hin- und hergewechselt werden. Wenn beispielsweise die Telefonverbindung zwischen den Teilnehmern der beiden Funkkommunikationsgeräte UE1, UE2 zum Kommunizieren aktiv geschaltet ist und nun ein Wechsel zur PTT-Applikation gewünscht ist, so informiert die Telefonieapplikation nur die PTT-Applikation, dass Letztere die Sprachübertragung wieder übernehmen soll. Nach positiver Bestätigung von der PTT-Applikation an die Telefonie-Applikation beendet dann die Telefonie-Applikation die Telefonverbindung. Im Unterschied zu Beispiel 4 ist es somit hier nicht erforderlich, eine neue PTT-Sitzung zusätzlich aufzubauen, sondern es kann einfach die noch bestehende, parallel aufrecht gehaltene PTT-Session wieder aktiv genutzt werden.

### Beispiel 6 zur netzwerkkontrollierten Lösung von 2.B:

Dieses Beispiel korrespondiert zum Verfahrensablauf von Beispiel 3, jedoch mit dem Unterschied, dass der Wechsel in Beispiel 6 in umgekehrter Richtung geht, nämlich von einer Telefonverbindung zu einer PTT-Sitzung. Ausgangspunkt ist hier die Telefonverbindung TC zwischen den beiden Funkkommunikationsgeräten UE1, UE2, wie sie in der Figur 3 dargestellt ist. Auch hier aktiviert der Nutzer des ersten Funkkommunikationsgeräts UE1 die Funktion "Wechsel zu PTT-Session" in seinem Telefonie-Menü. Der darauffolgende Signalfluss zwischen dem ersten Funkkommunikationsgerät UE1 und den beteiligten Netzwerkkomponenten ist dabei in der Figur 8 abgebildet. Das erste Funkkommunikationsgerät UE1 signalisiert seiner zuständigen Vermittlungseinheit MSC1 mit Hilfe eines Steuer- bzw. Benachrichtigungssignals IS1, dass ein Servicewechsel von Telefonie zu PTT gewünscht ist. In diesem Benachrichtigungssignal IS1 sind gleichzeitig die beiden Telefonnummern PN1, PN2 der beiden Funkkommunikationsgeräte UE1, UE2 enthalten. Dieses Benachrichtigungssignal IS1 hat in der Figur 8 die Bezeichnung "1: Switch to PTT (PN1, PN2)". Die Vermittlungseinheit MSC1 informiert die SGW-Komponente SGW1 mit Hilfe eines Benachrichtigungssignals SU2 über den Wechselwunsch des ersten Funkkommunikationsgeräts UE1. Diese SGW-Komponente SGW1 überträgt daraufhin ein Benachrichtigungssignal RF3 an die MGCF-Komponente MGCF1, die wiederum die CSCF1-Komponente mittels eines Informationssignals RF4 informiert. Die CSCF-Komponente CSCF1 sendet schließlich ein Benachrichtigungssignal RF5 an den PTT-Server PTTS1, wobei diesem auch die beiden Telefonnummern PN1, PN2 mitgeteilt werden. Auf diese Weise übermittelt die Vermittlungseinheit MSC1 ein oder mehrere Adressparameter mindestens eines an der leitungsorientierten Telefonverbindung beteiligten Funkkommunikationsgeräts mittels mindestens eines Steuersignals an diejenige Steuereinheit, die für die paketorientierte PTT-Sitzung zuständig ist. Dieses Steuersignal wird hier im Ausführungsbeispiel durch die Kette von Einzelsignalen SU2, RF3, RF4, RF5 gebildet. Es ist zusätzlich in der Figur 8 strichpunktiert eingezeichnet und mit dem Bezugszeichen MS1 versehen. In das Steuersignal MS1 wird durch die Vermittlungseinheit MSC1 zweckmäßigerweise der Identifikationsparameter T1 eingefügt, der die schon bestehende Telefonverbindung TC kennzeichnet und eine eindeutige Zuordnung zur gewünschten PTT-Sitzung überhaupt erst ermöglicht, so dass Verwechslungen zu anderen PTT-Sitzungen oder Telefonverbindungen vermieden sind. Das Benachrichtigungssignal IS1 wird seitens der Vermittlungseinheit MSC1 durch ein Quittierungssignal RIS1* an das erste Funkkommunikationsgerät UE1 quittiert. Der Empfang des Steuersignals MS1 wird seitens des PTT-Servers PTTS1 durch ein Antwortsignal RF6 an die CSCF-Komponente CSCF1 quittiert. Diese sendet ein Bestätigungssignal RF7 an die MGCF-Komponente MGCF1, die wiederum ein Bestätigungssignal RF8 an die SGW-Komponente SGW1 abschickt. Aufgrund des Steuersignals MS1 baut dann der PTT-Server eine PTT-Session zwischen den beiden beteiligten Funkkommunikationsgeräten UE1, UE2 auf. Diese Aktivierung der PTT-Session ist in der Figur 8 mit SPTT bezeichnet. Sobald die PTT-Session steht, werden Sprachdaten über die PTT-Session in der PS-Domain in nur eine Richtung übermittelt. Sprechberechtigt ist dann nur derjenige Nutzer, der an seinem Funkkommunikationsgerät gerade die PTT-Taste aktiviert hält. Der PTT-Server PTTS1 informiert das zweite Funkkommunikationsgerät UE2 mittels entsprechend zuständiger PS-Domain-Netzwerkkomponenten mit Hilfe eines Informationssignals IS7. Das zweite Funkkommunikationsgerät kann dabei dieses Anfragesignal IS7 automatisch annehmen. Genauso kann es zweckmäßig sein, dem Nutzer des zweiten Funkkommunikationsgeräts UE2 den Wechselwunsch des ersten Funkkommunikationsgeräts UE1 zu notifizieren, insbesondere akustisch oder optisch anzuzeigen. Der Nutzer kann dann selbständig entscheiden, ob er den Wechselwunsch akzeptieren will oder nicht. Nimmt das zweite Funkkommunikationsgerät UE2 den Wechselwunsch des ersten Funkkommunikationsgeräts UE1 an und signalisiert es dies mit Hilfe eines Bestätigungssignals IS8 dem PTT-Server PTTS1, so aktiviert dieser die PTT-Sitzung mit der Prozedur SPTT. Wenn der PTT-Server PTTS1 die PTT-Sitzung erfolgreich aufgebaut hat, signalisiert er dies mittels eines Bestätigungssignals N09 der CSCF-Komponente CSCF1, die dies mittels eines Quittierungssignals NO10 an die MGCF1-Komponente weiterreicht. Diese informiert entsprechend mittels eines Quittierungssignals NO11 die SGW-Komponente SGW1, die diese Quittierung mittels eines Bestätigungssignals SU12 an die Vermittlungseinheit MSC1 weitersendet. Gegebenenfalls informiert die Vermittlungseinheit MSC1 das erste Funkkommunikationsgerät UE1 mittels eines Bestätigungssignals SW16, dass der Wechselwunsch von Telefonie zu PTT erfolgreich ausgeführt worden ist. Daraufhin sendet das Funkkommunikationsgerät UE1 ein Bestätigungssignal RSW16 an die Vermittlungseinheit MSC1 zurück. Die Benachrichtigungssignale N09, NO10, NO11, SU12 können durch korrespondierende, zeitlich nacheinanderfolgende Antwortsignale RN012, RN013, RN014, RSU15 quittiert werden. Nach dem Wechsel zum PTT-Service kann die Vermittlungseinheit MSC1 dann die Telefonverbindung TC trennen. Alternativ dazu ist es auch möglich, die Telefonverbindung für eine vorgebbare Zeitdauer parallel aufrecht zu halten.

### Beispiel 7 zur netzwerkkontrollierten Lösung von 2.B:

Ausgangspunkt ist hier wiederum die Telefonverbindung TC zwischen den beiden Funkkommunikationsgeräten UE1, UE2, wie sie in der Figur 3 dargestellt ist. Auch hier aktiviert der Nutzer des ersten Funkkommunikationsgeräts UE1 die Funktion "Wechsel zu PTT-Session" in seinem Telefonie-Menü. Das erste Funkkommunikationsgerät UE1 signalisiert seinem zuständigen PTT-Server mit Hilfe eines Benachrichtigungssignals MS1*, dass ein Servicewechsel von Telefonie zu PTT gewünscht ist. In diesem Benachrichtigungssignal MS1* sind gleichzeitig die beiden Telefonnummern PN1, PN2 der beiden Funkkommunikationsgeräte UE1, UE2 und ein eindeutiger ID (Identifikations)-Parameter, der die bereits bestehende leitungsorientierte Telefonverbindung kennzeichnet bzw. identifiziert oder markiert, enthalten.
Daraufhin baut dann der PTT-Server eine PTT-Session zwischen den beiden beteiligten Funkkommunikationsgeräten UE1, UE2 auf. Sobald die PTT-Session steht, werden Sprachdaten über die PTT-Session in der PS-Domain in nur eine Richtung übermittelt. Sprechberechtigt ist dann nur derjenige Nutzer, der an seinem Funkkommunikationsgerät gerade; die PTT-Taste aktiviert hält. Wenn der PTT-Server PTTS1 die PTT-Sitzung erfolgreich aufgebaut hat, signalisiert er dies über den CSCF1, MGCF1 und SGW1 an die Vermittlungseinheit MSC1. Gegebenenfalls informiert die Vermittlungseinheit MSC1 das erste Funkkommunikationsgerät UE1, dass der Wechselwunsch von Telefonie zu PTT erfolgreich ausgeführt worden ist. Daraufhin sendet das Funkkommunikationsgerät UE1 ein Bestätigungssignal an die Vermittlungseinheit MSC1 zurück. Nach dem Wechsel zum PTT-Service kann die Vermittlungseinheit MSC1 dann die Telefonverbindung TC trennen. Alternativ dazu ist es auch möglich, die Telefonverbindung für eine vorgebbare Zeitdauer parallel aufrecht zu halten.

Auf diese Weise ist es für Gesprächspartner bequem möglich, zwischen einer normalen Telefonieverbindung und dem PTT-Service hin- und herzuwechseln. Dabei gibt es zwei Varianten für die Durchführung: Die eine ist, dass die beiden Funkkommunikationsgeräte den Rufaufbau für den Wechsel in den gewünschten Modus unter sich, ohne Beteiligung von Netzwerkkomponenten, regeln. Während die Gesprächsteilnehmer noch über die zuerst aufgebaute Kommunikationsverbindung sprechen, wird parallel die gewünschte zweite Kommunikationsverbindung aufgebaut. Die Funkkommunikationsgeräte einigen sich dann untereinander, wann sie wechseln. Der Vorteil hierbei ist, dass hierbei lediglich entsprechende Steuermittel bzw. Steuerapplikationen in den beteiligten Funkkommunikationsgeräten implementiert sind, während bereits vorhandene Netzwerkkomponenten verwendet werden können. Dies bedeutet, dass Änderungen im Netzwerk weitgehend vermieden sind. Die andere Variante ist, dass das Netzwerk den Wechsel auf Tastendruck der Nutzer hin arrangiert und steuert. Hier ist der Vorteil, dass die Netzwerkressourcen optimal ausgenutzt werden. Der Wechsel wird dadurch günstiger. Der Operator kann außerdem zusätzlich Geld verlangen. Allerdings tauschen hierbei Netzwerkkomponenten und die beteiligten Funkkommunikationsgeräte entsprechende Steuersignale und Benachrichtigungssignale untereinander aus, um den Wechsel einzuleiten. Dazu ist eine Anpassung hinsichtlich der Standardisierung der betroffenen Schnittstellen zwischen die Netzwerkkomponenten und den Funkkommunikationsgeräten zweckmäßig.

## Patentansprüche

1. Verfahren zur Steuerung des Wechsels zwischen einem paketorientierten PTT-Dienst (PC) und einem leitungsorientierten Kommunikations-Dienst (TC) für eine Kommunikation zwischen mindestens einem ersten beteiligten Funkkommunikationsgerät (UE1) und mindestens einem zweiten beteiligten Funkkommunikationsgerät (UE2) eines Funkkommunikationssystems (FC), demgemäß
- eine erste Kommunikationsverbindung (PC) für einen ersten der beiden genannten Kommunikations-Dienste (PC, TC) durch eine erste Steuereinheit (PTTS1) des Funknetzwerks des Funkkommunikationssystems (FC) aufgebaut wird,
- von einem der Funkkommunikationsgeräte (UE1, UE2), die an der bereits aufgebauten, ersten Kommunikationsverbindung (PC) beteiligt sind, an die erste Steuereinheit (PTTS1) mindestens ein Steuersignal (IS2*) übermittelt wird, durch das dieser Steuereinheit (PTTS1) ein Wechselwunsch von dem ersten zu dem zweiten der genannten beiden Kommunikations-Dienste (PC, TC) mitgeteilt wird,
- von der ersten Steuereinheit (PTTS1) ein Steuersignal (SM1) an eine zweite Steuereinheit (MSC1) übermittelt wird, durch das diese zum Aufbau einer zweiten Kommunikationsverbindung (PC) für die an der ersten Kommunikationsverbindung (PC) beteiligten Funkkommunikationsgeräte (UE1, UE2) veranlasst wird,
- von der zweiten Steuereinheit (MSC1) der Aufbau der zweiten Kommunikationsverbindung (TC) für die an der ersten Kommunikationsverbindung (PC) beteiligten Funkkommunikationsgeräten (UE1, UE2)durchgeführt wird,
- nach dem erfolgreichen Aufbau der zweiten Kommunikationsverbindung (TC) die Übertragung der Daten für die genannte Kommunikation über die zweite Kommunikationsverbindung (TC) durchgeführt wird.

2. Verfahren nach Anspruch 1,
**dadurch gekennzeichnet,**
**dass** in das Steuersignal (IS2) ein oder mehrere Adressparameter (PN1, PN2) des an der ersten Kommunikationsverbindung beteiligten Funkkommunikationsgeräts (UE2), an das der Wechselwunsch gerichtet wird, und/oder des an der ersten Kommunikationsverbindung beteiligten Funkkommunikationsgeräts (UE1), von dem der Wechselwunsch ausgeht, und/oder mindestens ein Identifikationsparameter (P1) zur Kennzeichnung der bereits aufgebauten, ersten Kommunikationsverbindung (PC) für die aufzubauende, zweite Kommunikationsverbindung (TC) eingefügt werden.

3. Verfahren nach Anspruch 2,
**dadurch gekennzeichnet,**
**dass** anhand des Identifikationsparameters (P1) im Steuersignal (IS2) die bereits aufgebaute, erste Kommunikationsverbindung (PC) der noch aufzubauenden, zweiten Kommunikationsverbindung (TC) zugeordnet wird, so dass eine eindeutige Verknüpfung zwischen der bereits aufgebauten, ersten Kommunikationsverbindung (PC) und der gewünschten, zweiten Kommunikationsverbindung (TC) bewirkt wird.

4. Verfahren nach einem der vorhergehenden Ansprüche,
**dadurch gekennzeichnet,**
**dass** die aufgebaute, erste Kommunikationsverbindung (PC) nach der Aktivierung der zweiten Kommunikationsverbindung (TC) abgebaut und beendet wird.

5. Verfahren nach einem der Ansprüche 1 mit 3,
**dadurch gekennzeichnet,**
**dass** die zweite Kommunikationsverbindung (TC) nach ihrer Aktivierung parallel zu der bereits aufgebauten, ersten Kommunikationsverbindung (PC) aufgebaut und gehalten wird.

6. Verfahren nach einem der vorhergehenden Ansprüche,
**dadurch gekennzeichnet,**
**dass** als Steuereinheit (PTTS1) für die paketorientierte PTT-Sitzung (PC) ein PTT-Server verwendet wird.

7. Verfahren nach einem der vorhergehenden Ansprüche,
**dadurch gekennzeichnet,**
**dass** als Steuereinheit (MSC1) für die leitungsorientierte Telefonverbindung (TC) eine MSC-Vermittlungseinheit verwendet wird.

8. Netzwerkkomponente (PTTS1, MSC1) mit einer Steuereinheit (SVS) zur Durchführung des Verfahrens nach einem der Ansprüche 1 mit 7.

9. Funkkommunikationssystem (FC) mit einer ersten Gruppe (G1) von Netzwerkkomponenten zur Auswahl und Bereitstellung einer paketorientierten PTT-Sitzung (PC) sowie mit einer zweiten Gruppe (G2) von Netzwerkkomponenten zur Auswahl und Bereitstellung einer leitungsorientierten Telefonverbindung (TC) als auswählbare Kommunikationsverbindungen zwischen mindestens einem ersten beteiligten Funkkommunikationsgerät (UE1) und mindestens einem zweiten beteiligten Funkkommunikationsgerät (UE2) eines Funkkommunikationssystems (FC), wobei die beiden Gruppen von Netzwerkkomponenten jeweils Steuermittel zur Durchführung des Verfahrens nach einem der Ansprüche 1 mit 7 aufweisen.

## Claims

1. Method for controlling the change between a packet-oriented PTT service (PC) and a circuit-oriented communication service (TC) for communication between at least one first connected radio communication appliance (UE1) and at least one second connected radio communication appliance (UE2) in a radio communication system (FC), according to which
- a first communication connection (PC) for a first of the two stated communication services (PC, TC) is set up by a first control unit (PTTS1) in the radio network in the radio communication system (FC),
- one of the radio communication appliances (UE1, UE2) involved in the first communication connection (PC), which has already been set up, sends the first control unit (PTTS1) at least one control signal (IS2*) which is used to notify this control unit (PTTS1) of the need to change from the first to the second of the stated two communication services (PC, TC),
- the first control unit (PTTS1) sends a control signal (SM1) to a second control unit (MSC1), which control signal prompts the latter to set up a second communication connection (PC) for the radio communication appliances (UE1, UE2) involved in the first communication connection (PC),
- the second control unit (MSC1) performs the set-up of the second communication connection (TC) for the radio communication appliances (UE1, UE2) involved in the first communication connection (PC),
- successful set-up of the second communication connection (TC) is followed by performance of the transmission of the data for the stated communication via the second communication connection (TC).

2. Method according to Claim 1,
**characterized**
**in that** the control signal (IS2) has inserted into it one or more address parameters (PN1, PN2) for that radio communication appliance (UE2), connected to the first communication connection, to which the need to change is directed and/or for that radio communication appliance (UE1), connected to the first communication connection, from which the need to change issues, and/or at least one identification parameter (P1) for distinguishing the first communication connection (PC), which has already been set up, for the second communication connection (TC), which needs to be set up.

3. Method according to Claim 2,
**characterized**
**in that** the identification parameter (P1) in the control signal (IS2) is used to associate the first communication connection (PC), which has already been set up, with the second communication connection (TC), which is yet to be set up, so that an explicit link is brought about between the first communication connection (PC), which has already been set up, and the required, second communication connection (TC).

4. Method according to one of the preceding claims,
**characterized**
**in that** the first communication connection (PC), which has been set up, is cleared down and terminated after the second communication connection (TC) has been activated.

5. Method according to one of Claims 1 to 3,
**characterized**
**in that**, after it has been activated, the second communication connection (TC) is set up and maintained in parallel with the first communication connection (PC), which has already been set up.

6. Method according to one of the preceding claims,
**characterized**
**in that** the control unit (PTTS1) used for the packet-oriented PTT session (PC) is a PTT server.

7. Method according to one of the preceding claims,
**characterized**
**in that** the control unit (MSC1) used for the circuit-oriented telephone connection (TC) is an MSC switching unit.

8. Network component (PTTS1, MSC1) having a control unit (SVS) for carrying out the method according to one of Claims 1 to 7.

9. Radio communication system (FC) having a first group (G1) of network components for selecting and providing a packet-oriented PTT session (PC) and also having a second group (G2) of network components for selecting and providing a circuit-oriented telephone connection (TC) as selectable communication connections between at least one first connected radio communication appliance (UE1) and at least one second connected radio communication appliance (UE2) in a radio communication system (FC), the two groups of network components each having control means for carrying out the method according to one of Claims 1 to 7.

## Revendications

1. Procédé de commande de la commutation entre un service PTT (PC) orienté paquet et un service de communication (TC) orienté ligne pour une communication entre au moins un premier appareil de radiocommunication (UE1) impliqué et au moins un second appareil de radiocommunication (UE2) impliqué d'un système de radiocommunication (FC), selon lequel
- une première liaison de communication (PC) pour un premier des deux services de communication (PC, TC) mentionnés est établie au moyen d'une première unité de commande (PTTS1) du réseau de radiocommunication du système de radiocommunication (FC),
- au moins un signal de commande (IS2*) est transmis à la première unité de commande (PTTS1) par un des appareils de radiocommunication (UE1, UE2) impliqués dans la première liaison de communication (PC) déjà établie, signal grâce auquel un souhait de commutation du premier vers le second des deux services de communication (PC, TC) mentionné est notifié à cette unité de commande (PTTS1),
- la première unité de commande (PTTS1) transmet à une seconde unité de commande (MSC1) un signal de commande (SM1) grâce auquel celle-ci est invitée à établir une seconde liaison de communication (PC) pour les appareils de radiocommunication (UE1, UE2) impliqués dans la première liaison de communication (PC),
- la seconde unité de commande (MSC1) procède à l'établissement de la seconde liaison de communication (TC) pour les appareils de radiocommunication (UE1, UE2) impliqués dans la première liaison de communication (PC),
- une fois que la seconde liaison de communication (TC) a été établie avec succès, la transmission des données pour ladite communication s'effectue par le biais de la seconde liaison de communication (TC).

2. Procédé selon la revendication 1, **caractérisé par le fait que** l'on insère dans le signal de commande (IS2) un ou plusieurs paramètres d'adresse (PN1, PN2) de l'appareil de radiocommunication (UE2) impliqué dans la première liaison de communication auquel s'adresse le souhait de commutation et/ou de l'appareil de radiocommunication (UE1) impliqué dans la première liaison de communication qui émet le souhait de commutation, et/ou au moins un paramètre d'identification (P1) pour la caractérisation de la première liaison de communication (PC) déjà établie pour la seconde liaison de communication (TC) à établir.

3. Procédé selon la revendication 2, **caractérisé en ce que**, sur la base du paramètre d'identification (P1) dans le signal de commande (IS2), la première liaison de communication (PC) déjà établie est associée à la seconde liaison de communication (TC) encore à établir, de façon à obtenir une association univoque entre la première liaison de communication (PC) déjà établie et la seconde liaison de communication (TC) souhaitée.

4. Procédé selon l'une des revendications précédentes, **caractérisé en ce que** la première liaison de communication (PC) établie est interrompue et terminée après l'activation de la seconde liaison de communication (TC).

5. Procédé selon l'une des revendications 1 à 3, **caractérisé en ce que** la seconde liaison de communication (TC) est établie et maintenue, après son activation, parallèlement à la première liaison de communication (PC) déjà établie.

6. Procédé selon l'une des revendications précédentes, **caractérisé en ce que** l'on utilise un serveur PTT en tant qu'unité de commande (PTTS1) pour la session PTT (PC) orientée paquets.

7. Procédé selon l'une des revendications précédentes, **caractérisé en ce que** l'on utilise une unité de commutation MSC en tant qu'unité de commande (MSC1) pour la liaison téléphonique (TC) orientée ligne.

8. Composants de réseau (PTTS1,MSC1) avec une unité de commande (SVS) pour l'exécution du procédé selon l'une des revendications 1 à 7.

9. Système de radiocommunication (FC) comprenant un premier groupe (G1) de composants de réseau destinés à la sélection et à la mise à disposition d'une session PTT (PC) orientée paquets ainsi qu'un second groupe (G2) de composants de réseau destinés à la sélection et à la mise à disposition d'une liaison téléphonique (TC) orientée ligne en tant que liaisons de communication sélectionnables entre au moins un premier appareil de radiocommunication (UE1) impliqué et au moins un second appareil de radiocommunication (UE2) impliqué d'un système de radiocommunication (FC), les deux groupes de composants de réseau comprenant à chaque fois des moyens de commande pour l'exécution du procédé selon l'une des revendications 1 à 7.
